(19) Europäisches Patentamt
European Patent Office
Office européen des brevets

(11) **EP 4 742 450 A2**

(12) **EUROPEAN PATENT APPLICATION**

(43) Date of publication:
**13.05.2026 Bulletin 2026/20**

(51) International Patent Classification (IPC):
**H01Q 5/378** (2015.01)

(21) Application number: **26167169.7**

(22) Date of filing: **08.08.2023**

(52) Cooperative Patent Classification (CPC):
**H01Q 11/08; G01S 19/36; H01Q 1/38; H01Q 5/25; H01Q 5/378**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.08.2022 US 202263370774 P**

(62) Document number(s) of the earlier application(s) in accordance with Art. 76 EPC:
**23855920.7 / 4 537 424**

(71) Applicant: **Calian GNSS Ltd.**
**Ottawa, Ontario K2V 1C8 (CA)**

(72) Inventors:
• **MOVAHEDINIA, Reza**
**Stittsville, K2R 0R1 (CA)**
• **BOTROS, Joseph**
**Ottawa, K1W 0G6 (CA)**
• **HAUTCOEUR, Julien**
**Gatineau, J8Y 2N1 (CA)**

(74) Representative: **Murgitroyd & Company**
**165-169 Scotland Street**
**Glasgow G5 8PL (GB)**

Remarks:
This application was filed on 24.03.2026 as a divisional application to the application mentioned under INID code 62.

(54) **MULTI-ELEMENT FILAR ANTENNA STRUCTURES**

(57)　Single band and multiband wireless antennas are an important element of wireless systems. Competing tradeoffs of overall footprint, performance aspects such as impedance matching and cost require not only consideration but become significant when multiple antenna elements are employed within a single antenna such as to obtain circular polarization transmit and/or receive. Accordingly, it would be beneficial to provide designers of a wide range of electrical devices and systems with compact single or multiple frequency band antennas which, in addition to providing the controlled radiation pattern and circular polarization purity (where required) are impedance matched without substantially increasing the footprint of the antenna and/or the complexity of the microwave / RF circuit interfaced to them, whilst supporting multiple signals to/from multiple antenna elements in antennas employing them. Solutions present achieve this through provisioning one or more capacitive series reactances discretely or in combination with one or more shunt capacitive reactances.

Figure 13

**Description**

**CROSS-REFERENCE TO RELATED APPLICATIONS**

This patent application claims the benefit of priority from U.S. Provisional Patent Application 63/370,774 filed August 8, 2022; the contents of which are incorporated herein by reference.

**FIELD OF THE INVENTION**

This patent application relates to global navigation satellite systems and more particularly to antennas, antenna elements and antenna assemblies employing compact multi-element single band and multiband antenna filar elements.

**BACKGROUND OF THE INVENTION**

A global satellite navigation system (satnav) or global navigation satellite system (GNSS) is a system that exploits a network of autonomous geo-spatially positioned satellites to provide geolocation and time information to a suitable receiver anywhere on or near the Earth where there is an unobstructed line of sight. In applications where relatively low precision is required low complexity surface mount patch antennas are generally employed accessing a single GNSS signal. However, other applications requiring high precision of timing and/or location require accurately tuned, wider bandwidth, antennas which, ideally, support multiple frequency operation providing higher fidelity reception and thereby improved multipath rejection and better output phase linearity.

Even within these applications there is a constant drive for compact multiband antennas that can be easily integrated into portable devices or more generally into mobile platforms and equipment. These antennas should provide a controlled radiation pattern, namely a uniform coverage of the upper hemisphere of their radiation pattern and circular polarization purity to improve cross-polarization rejection and hence multipath rejection. Further, low profile, low weight and smaller footprint are of particular importance for applications such as Unmanned Aerial Vehicles (UAVs) and for personal tracking, etc.

Accordingly, it would be beneficial to provide antenna elements that support these requirements whilst enabling operation across multiple GNSS. However, these GNSS specifications when combined define a wider operating frequency range at the lower band between approximately 1.160GHz to 1.300GHz (140MHz) than at the upper band between approximately 1.559GHz and 1.610GHz (51MHz). Within the prior art designs typically provided wider bandwidth operation at the upper band relative to the lower band. It would therefore be beneficial to provide GNSS equipment designers with GNSS antenna designs that provided improved performance in the lower band enabling operational compatibility with multiple GNSS systems.

Other aspects and features of the present invention will become apparent to those ordinarily skilled in the art upon review of the following description of specific embodiments of the invention in conjunction with the accompanying figures.

**SUMMARY OF THE INVENTION**

It is an object of the present invention to mitigate limitations within the prior art relating to global navigation satellite systems and more particularly to antennas, antenna elements and antenna assemblies employing compact multi-element single band and multiband antenna filar elements.

In accordance with an embodiment of the invention there is provided a filar antenna comprising:

a ground plane;
a feed point proximate the ground plane; and
a first filar element comprising:

a first element having a first end electrically coupled to the feed point and a second distal end;
a second element having a first end electrically coupled to the ground plane and a second distal end; and
a third element having a first end electrically coupled to the ground plane and a second distal end; wherein

the second distal end of the second element is electrically connected to the second distal end of the first element;
the second distal end of the third element is electrically connected to the second distal end of the first element;
a first electrical length from the feed point to the ground plane via the first element and the second element is established in dependence upon a multiple of a half wavelength of a first operating frequency of the first filar element; and
a second electrical length from the feed point to the ground plane via the first element and the second element is established in dependence upon the same multiple of a half wavelength of a first operating frequency as that of the first electrical length.

In accordance with an embodiment of the invention there is provided a filar antenna comprising:

a feeding network on a circuit board comprising a ground plane and a combining network with a plurality of feed points; and

a filar antenna with an equal plurality of filar nodes, wherein

said combining network comprised of circuit elements effective to constructively sum microwave electrical signals present at each of said feed points, each of said electrical signals having a predetermined relative phase relationship, each of said feed points connected to a corresponding one of said filar nodes;

said filar antenna comprising a plurality of first filar elements arranged around and above the circuit board;

each first filar element of the plurality of first filar elements comprises:

a first element having a first end being a first node of the plurality of filar nodes electrically coupled to a feed point of the plurality of feed points and a second distal end;

a second element having a first end electrically coupled to the ground plane and a second distal end; and

a third element having a first end electrically coupled to the ground plane and a second distal end; wherein

the second distal end of the second element is electrically connected to the second distal end of the first element;

the second distal end of the third element is electrically connected to the second distal end of the first element;

a first electrical length from the feed point to the ground plane via the first element and the second element is established in dependence upon a multiple of a half wavelength of a first operating frequency of the first filar element; and

a second electrical length from the feed point to the ground plane via the first element and the second element is established in dependence upon the same multiple of a half wavelength of a first operating frequency as that of the first electrical length.

In accordance with an embodiment of the invention there is provided a filar antenna element comprising:

a first element having a first end electrically coupled to a feed point for at least one of coupling electrical signals to the feed point or receiving electrical signals from the feed point and second distal end;

a second element having a first end electrically coupled to the a ground plane disposed proximate to the feed point and a second distal end; and

a third element having a first end electrically coupled to the ground plane and a second distal end; wherein

the second distal end of the second element is electrically connected to the second distal end of the first element;

the second distal end of the third element is electrically connected to the second distal end of the first element;

a first electrical length from the feed point to the ground plane via the first element and the second element is established in dependence upon a multiple of a half wavelength of a first operating frequency of the first filar element; and

a second electrical length from the feed point to the ground plane via the first element and the second element is established in dependence upon the same multiple of a half wavelength of a first operating frequency as that of the first electrical length.

In accordance with an embodiment of the invention there is provided a filar antenna comprising element comprising:

a first antenna structure comprising:

a first element having a first end electrically coupled to a feed point for at least one of coupling electrical signals to the feed point or receiving electrical signals from the feed point and second distal end;

a second element having a first end electrically coupled to the a ground plane disposed proximate to the feed point and a second distal end; and

a third element having a first end electrically coupled to the ground plane and a second distal end; and

a second antenna structure comprising:

a fourth element having a first end electrically coupled to the ground plane and a second distal end; and

a fifth element having a first end electrically coupled to the ground plane and a second distal end; wherein

the second distal end of the second element is electrically connected to the second distal end of the first element;
the second distal end of the third element is electrically connected to the second distal end of the first element;
the second distal end of the fourth element is electrically connected to the second distal end of the fifth element;
a first electrical length from the feed point to the ground plane via the first element and the second element is established in dependence upon a multiple of a half wavelength of a first operating frequency of the first filar element; and
a second electrical length from the feed point to the ground plane via the first element and the second element is established in dependence upon the same multiple of a half wavelength of a first operating frequency as that of the first electrical length;
a third electrical length from the ground plane to the ground plane via the fourth element and the fifth element is established in dependence upon a multiple of a half wavelength of a second operating frequency of the second filar element; and
the first filar structure and second filar structure are radiatively coupled to each other.

In accordance with an embodiment of the invention there is provided an antenna element comprising:

a first section coupled at one end to one of a microwave feed point and ground having a first length, a first width at the end coupled to the one of the microwave feed point and ground, and a second width at a distal end to that coupled to the one of the microwave feed point and ground; and
a second section coupled at one end to the distal end of the first section having a second length, a third width at the end coupled to the first section and a fourth width at a distal end to that coupled to the first section; wherein
the height of the antenna element is reduced relative to a length of a filar antenna element operating at the same frequency as the antenna element.

Other aspects and features of the present invention will become apparent to those ordinarily skilled in the art upon review of the following description of specific embodiments of the invention in conjunction with the accompanying figures.

**BRIEF DESCRIPTION OF THE DRAWINGS**

Embodiments of the present invention will now be described, by way of example only, with reference to the attached Figures, wherein:

Figure 1A depicts the operating bands for 4 dominant global navigation satellite systems (GNSSs);
Figure 1B depicts a quad-filar element antenna according to the prior art;
Figures 2A and 2B depict a folded multi-filar element antenna according to an embodiment of the invention;
Figure 3 depicts an electrical representation of a standard monopole antenna;
Figure 4 depicts an electrical representation of a folded multi-filar element antenna according to an embodiment of the invention resulting in an equivalent folded dipole circuit;
Figure 5 depicts the decomposition of a folded dipole into transmission line and antenna modes;
Figure 6A depicts antenna and transmission line modes of folded multi-filar element according to an embodiment of the invention;
Figure 6B depicts an equivalent parallel circuit to recombine the individual mode S-parameters of simulated folded multi-filar element antenna structures according to embodiments of the invention;
Figure 7 depicts simulated antenna and transmission line mode impedances discretely and as combined per the equivalent circuit of Figure 6B for a folded multi-filar element antenna according to an embodiment of the invention;
Figure 8 depicts the simulated antenna and transmission line mode impedances discretely and as combined per the equivalent circuit of Figure 6B for a folded multi-filar element antenna according to an embodiment of the invention as overlaid into a single chart;
Figure 9 depicts the recombined simulation impedance with the measured impedance of a folded multi-filar element antenna according to an embodiment of the invention;
Figure 10 depicts an impedance transformer circuit representation of a folded multi-filar element antenna according to an embodiment of the invention;
Figure 11 depicts an electrical representation of an N-section a folded multi-filar element antenna according to an embodiment of the invention;
Figure 12 depicts a folded triple filar element antenna according to an embodiment of the invention;
Figure 13 depicts a substrate for forming an antenna with quad folded triple filar elements according to an embodiment of the invention;

Figure 14 depicts a triple filar element antenna structure according to an embodiment of the invention;

Figure 15 depicts a dual band antenna element employing a triple filar element operating at one frequency coupled with a dual filar antenna element operating at a second frequency according to an embodiment of the invention;

Figure 16 depicts a dual band antenna element employing a triple filar element operating at one frequency coupled with a dual filar antenna element operating at a second frequency according to an embodiment of the invention;

Figure 17 depicts a dual band antenna element employing a triple filar element operating at one frequency coupled with a dual filar antenna element operating at a second frequency according to an embodiment of the invention;

Figure 18 depicts a dual band antenna element employing a multi-filar element operating at one frequency coupled with a second multi-filar antenna element operating at a second frequency according to an embodiment of the invention;

Figure 19 depicts a dual band antenna element employing a multi-filar element operating at one frequency coupled with a second multi-filar antenna element operating at a second frequency according to an embodiment of the invention;

Figure 20 depicts dual band antenna elements with multi-filar elements according to embodiments of the invention;

Figure 21 depicts an exemplary microwave / RF circuit and antenna employing quad multi-element filar antenna elements according to an embodiment of the invention;

Figures 22 and 23 depict tiple band antenna elements employing a pair of multi-filar elements operating at two frequencies with one of the multi-filar elements coupled to a third filar element operating at a third frequency according to an embodiment of the invention;

Figures 24 to 27 depict triple band antenna elements according to embodiments of the invention representing variants of the designs depicted in Figures 22 and 23 wherein the third filar element geometry is varied to adjust its operating frequency without increasing the physical height of the triple band antenna elements;

Figure 28 depicts a triple band antenna element according to an embodiment of the invention representing a variant of the design depicted in Figure 27 wherein the sequence of filar elements is varied minimizing a "footprint" of the antenna element;

Figure 29 depicts an antenna employing four triple band antenna elements according to an embodiment of the invention as depicted in Figure 24 to provide a circularly polarized GNSS antenna;

Figure 30 depicts a triple band antenna element according to embodiments of the invention representing variants of the designs depicted in Figures 22 and 23 wherein the third filar element geometry is varied to adjust its operating frequency and lower the physical height of the triple band antenna elements; and

Figure 31 depicts examples of the filar tapering concepts depicted in Figures 24 to 28 with respect to a single filar element within multi-filar elements.

## DETAILED DESCRIPTION

The present description is directed to global navigation satellite systems and more particularly to antennas, antenna elements and antenna assemblies employing compact multi-element single band and multiband antenna filar elements.

The ensuing description provides representative embodiment(s) only, and is not intended to limit the scope, applicability or configuration of the disclosure. Rather, the ensuing description of the embodiment(s) will provide those skilled in the art with an enabling description for implementing an embodiment or embodiments of the invention. It being understood that various changes can be made in the function and arrangement of elements without departing from the spirit and scope as set forth in the appended claims. Accordingly, an embodiment is an example or implementation of the inventions and not the sole implementation. Various appearances of "one embodiment," "an embodiment" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention can also be implemented in a single embodiment or any combination of embodiments. Further, the terms and phrases used herein are not intended to be limiting, but rather, to provide an understandable description of the invention.

Reference in the specification to "one embodiment", "an embodiment", "some embodiments" or "other embodiments" means that a particular feature, structure, or characteristic described in connection with the embodiments is included in at least one embodiment, but not necessarily all embodiments, of the inventions. The phraseology and terminology employed herein is not to be construed as limiting but is for descriptive purpose only. It is to be understood that where the claims or specification refer to "a" or "an" element, such reference is not to be construed as there being only one of that element. It is to be understood that where the specification states that a component feature, structure, or characteristic "may", "might", "can" or "could" be included, that particular component, feature, structure, or characteristic is not required to be included.

Reference to terms such as "left", "right", "top", "bottom", "front" and "back" are intended for use in respect to the orientation of the particular feature, structure, or element within the figures depicting embodiments of the invention. It would be evident that such directional terminology with respect to the actual use of a device has no specific meaning as the device can be employed in a multiplicity of orientations by the user or users.

Reference to terms "including", "comprising", "consisting" and grammatical variants thereof do not preclude the addition of one or more components, features, steps, integers or groups thereof and that the terms are not to be construed as specifying components, features, steps or integers. Likewise, the phrase "consisting essentially of", and grammatical variants thereof, when used herein is not to be construed as excluding additional components, steps, features integers or groups thereof but rather that the additional features, integers, steps, components or groups thereof do not materially alter the basic and novel characteristics of the claimed composition, device or method. If the specification or claims refer to "an additional" element, that does not preclude there being more than one of the additional element.

A "filar element" (or filar) as used herein and throughout this disclosure may relate to, but not be limited to, a metallic element having a geometry of a line in that it is long, narrow, and thin. The term filar meaning "of or relating to a thread or line." According, a thin film metallic trace having a length larger than its width is a linear element or filar element.

A "filar antenna element" as used herein and throughout this disclosure may relate to, but not be limited to, an element of a microwave or RF antenna comprising one or more filar elements.

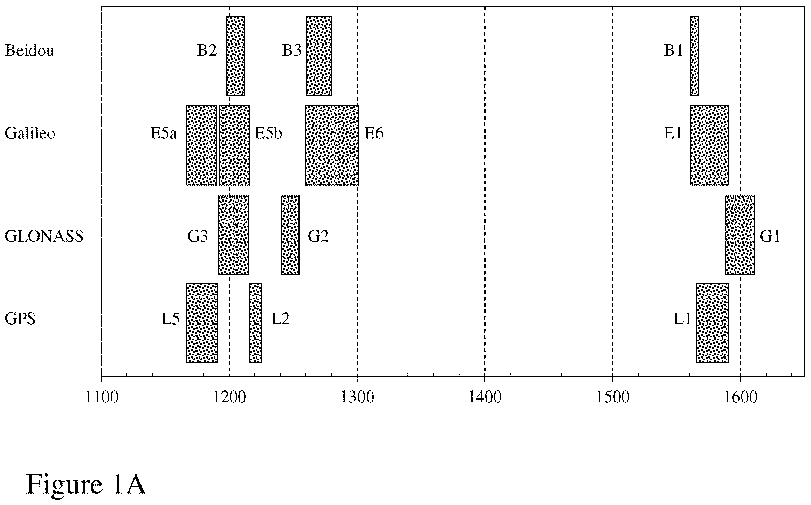

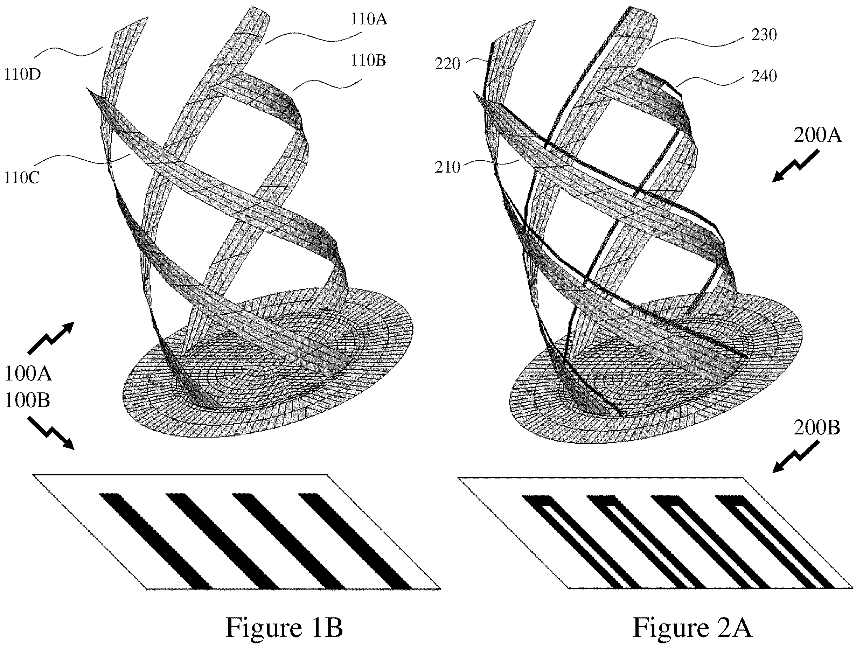

A "filar antenna" as used herein and throughout this disclosure may relate to, but not be limited to, a microwave or RF antenna comprising one or more filar antenna elements wherein each of the filar antenna elements may comprise one or more filar elements. Accordingly, a filar antenna may, for example, comprise four filar antenna elements each comprising a pair of filar elements. Alternatively, it may comprise, for example, four filar antenna elements each comprising a single filar element or three filar elements, a single filar antenna element, eight filar antenna elements each comprising a pair of filar elements, or six filar antenna elements each comprising three filar elements. For example, Figures 1-3A and 4-8 each depict a filar antenna element according to an embodiment of the invention.

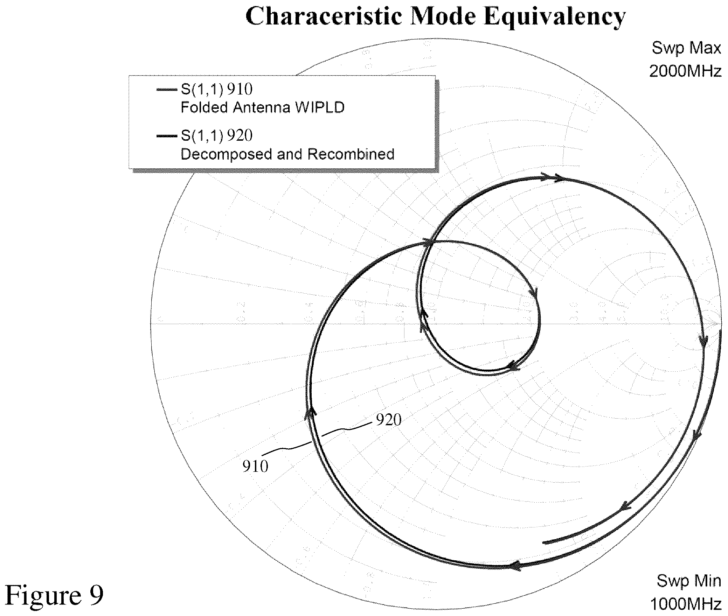

A "feed point" (FP) as used herein and throughout this disclosure relates to or refers to a point at which a filar assembly such as those depicted in Figures 1-3A and 4-8 is coupled to a microwave circuit such as microwave feed network or microwave combining network such as depicted in Figure 9.

A "filar node" as used herein, and throughout this disclosure relates to or refers to the point at which a filar antenna element is coupled to a feed point.

According to embodiments of the present invention compact filar antennas and filar element based antennas are provided which employ folder multi-filar element structures. Further, according to embodiments of the present invention folder multi-filar element based antennas are provided which employ a pair of folded multi-filar elements capacitively coupled to provided dual band operation from a single microwave / RF feed point / filar node.

It would be understood by one of skill in the art that folded multi-filar antennas and folded multi-filar element based antennas described with respect to embodiments of the invention and as depicted in respect of Figures 1 to 20 may be formed, for example, as discrete metallic elements, as metallic elements upon a formed or shaped circuit board, as metallic elements upon a substrate, as metallic elements upon a flexible circuit board, or as metallic elements formed upon a flexible substrate.

It would be understood by one of skill in the art that folded multi-filar antennas and folded multi-filar element based antennas described with respect to embodiments of the invention and as depicted in respect of Figures 1 to 20 may be employed in antennas of varying three-dimensional geometries including, but not limited to, cylindrical, pyramidal, hemispherical, spherical, and fructo-conical.

Table 1 below presents the operating frequencies for single and dual band GNSS receivers for civilian and military applications. These being Beidou, Galileo, GLONASS, GPS, and NAVIC. Those for Beidou, Galileo, GLONASS and GPS with provide for dual band operation in the frequency range 1150MHz-1610MHz are also depicted in Figure 1A. Accordingly, a GNSS antenna supporting both bands is required to support a larger 140MHz bandwidth in the lower band, between approximately 1.160GHz to 1.300GHz, than the approximately 51MHz at the upper band, between approximately 1.559GHz and 1.610GHz. However, as noted above prior art dual band GNSS antenna structures typically provide wider bandwidth operation at the upper band relative to the lower band. Accordingly, the inventors have established GNSS antenna designs that provide improved bandwidth performance in the lower band enabling operational compatibility with multiple GNSS systems.

| System | Beidou | Galileo | GLONASS |
|---|---|---|---|
| Owner | China | Europe | Russia |
| Freq. | 1.559-1.563 GHz (B1) | 1.164-1.189 GHz (E5a) | 1.593-1.610 GHz (G1) |
|  | 1.195-1.210 GHz (B2) | 1.189-1.214 GHz (E5b) | 1.237-1.254 GHz (G2) |

(continued)

| System | Beidou | Galileo | GLONASS |
|---|---|---|---|
| | 1.256-1.280 GHz (B3) | 1.260-1.300 GHz (E6)<br>1.559-1.591 GHz (E1) | 1.189-1.214 GHz (G3) |

Table 1: Operating Frequencies of GNSS Systems (Nearest 1MHz)

| System | GPS | NAVIC |
|---|---|---|
| Owner | USA | India |
| Freq. | 1.563-1.587 GHz (L1 signal)<br>1.215-1.2396 GHz (L2 signal)<br>1.164-1.189 GHz (L5 Band) | 1.164-1.188 GHz (L5 Band)<br>2.483-2.500 GHz (S Band) |

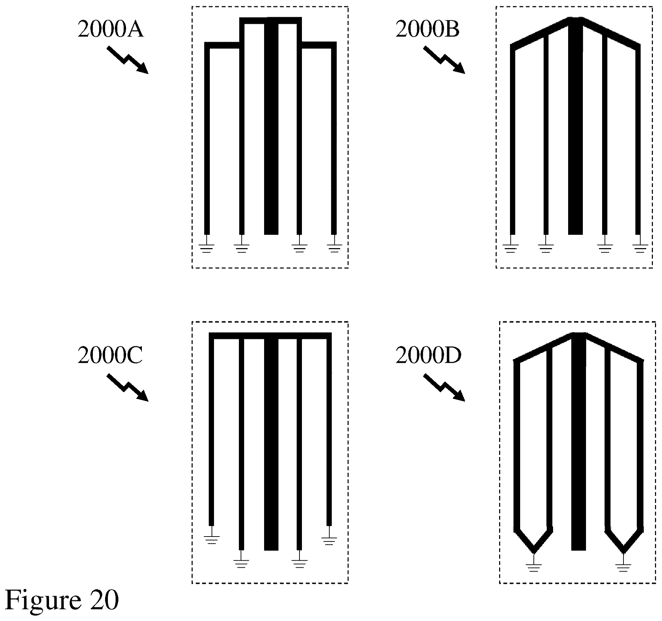

For circularly polarized signals, as employed by GNSS satellites, a quad element is typically employed where, for a receiver, the wireless signals from the four antenna elements are combined within a microwave circuit such as depicted in Figure 20. Where the four elements are disposed equidistantly then their relative phases may be viewed as 0°, 90°, 180° and 270° respectively. Within the prior art a common antenna element employed in commercial quadrifilar antennae is a single filar element with an overall electrical length of $\lambda/4$, with $\lambda$ being the wavelength corresponding to the resonant frequency of the element. Such an antenna being depicted in Figure 1B where the filar elements around wound around a former or formed upon a carrier which is formed into a cylinder. These helical filar elements have a lower impedance than that of a monopole antenna. A low impedance requires a high-Q match to improve the matching to the external impedance of the wireless/microwave circuits coupled to the quadrifilar antenna, typically 50 $\Omega$, which results in a reduced bandwidth. First image 100A in Figure 1B depicts the four filar elements 110A to 110D respectively whilst second image 100B depicts the filar traces upon a substrate, e.g., flexible PCB, which is formed into a cylinder to provide the helical structure of the four filar elements 110A to 110D respectively as depicted in first image 100A.

In order to increase the inherent impedance without increasing the height of the antenna the inventors have extended and then folded each filar element where the folded section of the filar element running back down is parallel to the initial main section and terminates to ground. The result is what the inventors referred to a folded multi-filar element which has an electrical length of length of $\lambda/2$ but is folded at the $\lambda/4$ point to form a bifilar antenna element as depicted in Figure 2A. First image 200A in Figure 2A depicts the four bifilar elements 210 to 240 respectively whilst second image 200B depicts these bifilar traces upon a substrate, e.g., flexible PCB, which is formed into a cylinder to provide the helical structure of the four bifilar elements 210A to 210D respectively as depicted in first image 200A. The spacing between the two filar elements of each of the bifilar elements 210 to 240 respectively being kept small to ensure maximum current in both sections whilst also ensuring that the electrical lengths of the filar element sections remain equivalent. Within first image 200A the filar elements of each bifilar elements 210 to 240 respectively are depicted with different widths whereas within second image 200B they are depicted with similar or equal widths.

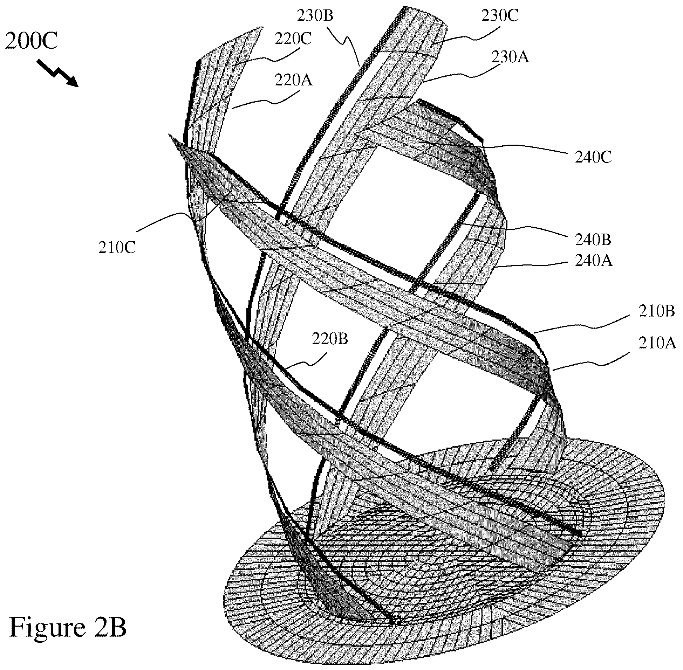

Third image 200C in Figure 2B depicts the quad bifilar structure in more detail. Accordingly, a first bifilar comprises first first filar element 210A which runs helically up the antenna from a first microwave feed point (FP)to a first strip 210C which connects the distal end of the first first filar element 210A to a distal end of the first second filar element 210B wherein the lower end of the first second filar element 210B is shorted to ground. This ground being, for example, a ground plane extending across the base of the antenna.

Similarly, the next bifilar element radially around the antenna comprises a second first filar element 220A, a second second filar element 220B and a second strip 220C. The second strip 230C joins the distal ends of the second first filar element 220A and second second filar element 220B together. The first ends of the second first filar element 220A and second second filar element 220B being connected to a second microwave FP and ground, respectively.

Similarly, the next bifilar element radially around the antenna comprises a third first filar element 230A, a third second filar element 230B and a third strip 230C. The third strip 230C joins the distal ends of the third first filar element 230A and third second filar element 230B together. The first ends of the third first filar element 230A and third second filar element 230B being connected to a third microwave FP and ground, respectively.

Finally, the next bifilar element radially around the antenna comprises a fourth first filar element 240A, a fourth second filar element 240B and a fourth strip 240C. The fourth strip 240C joins the distal ends of the fourth first filar element 240A and fourth second filar element 240B together. The first ends of the fourth first filar element 240A and fourth second filar element 240B being connected to a fourth microwave FP and ground, respectively.

In each instance the length of a first filar element, the second filar element and strip is equivalent to $\lambda/2$ whilst the lengths of the first filar element and second filar element are approximately $\lambda/4$.

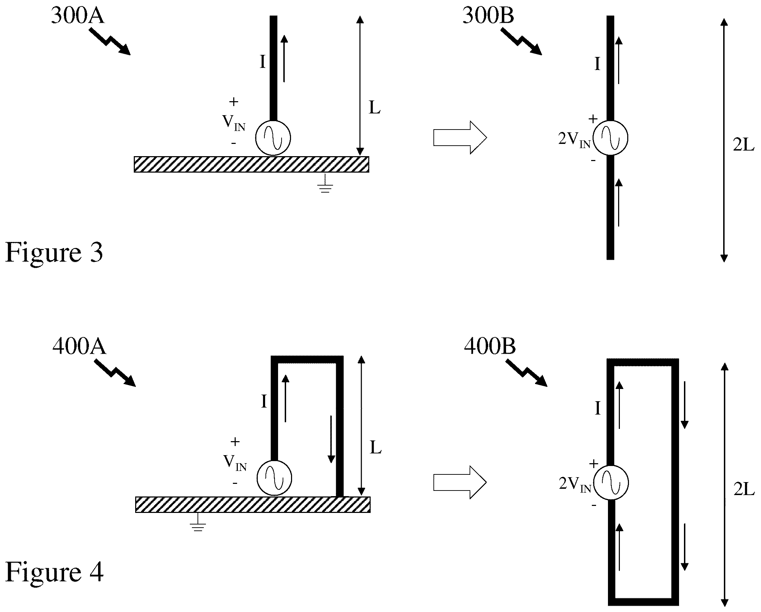

Referring to Figure 3 in first image 300A a monopole antenna of length L is depicted disposed above a ground plane with a signal, $V_{IN}$, applied at the end closest to the ground plane. Referring to second image 300B with the application of image theory then the monopole antenna in first image 300A is equivalent to a standard monopole antenna of length 2L with double the input voltage $2V_{IN}$.

However, referring to first image 400A in Figure 4 the folded monopole is depicted with the same signal, $V_{IN}$, with the folded monopole having two sections of length L, assuming negligible length of the shorting strip with the distal end of the folded monopole coupled to ground. Accordingly, in second image 400B the application of image theory to the folded monopole results in the equivalent of a folded dipole circuit with double the input voltage, $2V_{IN}$, and length 2L.

Whilst, within the first and third images 200A and 200C in Figures 2A and 2B depict the folded monopole sections wrapping around a cylindrical shape in the form of helical elements the impedance transformation will be approximately that of second image 400B in Figure 4. However, the trends will be identical. Accordingly, using image theory the helical bifilar elements can be described as a folded dipole with double the input voltage and without a ground plane.

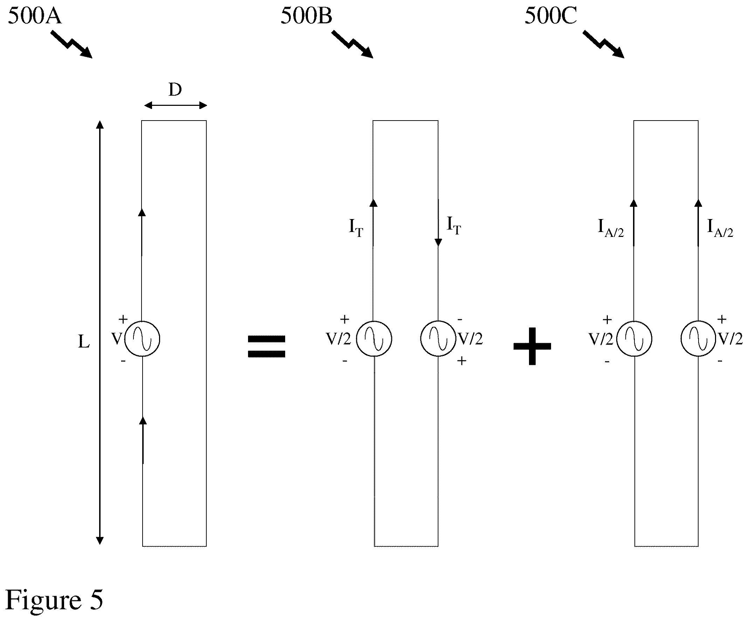

A folded dipole, such as depicted in second image 400B in Figure 4, operates as a balanced system, which can be decomposed into two current modes of operation, namely a transmission-line mode and an antenna mode in order to model the bifilar antenna element's input impedance. Figure 5 depicts the decomposition visually of the folded dipole into these two modes. Accordingly, the folded dipole in first image 500A is decomposed into the transmission line mode in second image 500B and the antenna mode in third image 500C. Accordingly, considering an input voltage V applied to the folded dipole then in transmission line mode this can be viewed as electrically equivalent as two voltage sources on either vertical section of voltage V/2 which are out of phase such that the current induced flows round the loop. Now for the antenna mode this can be viewed as electrically equivalent as the same pair of voltage sources in the two vertical sections but now in phase such that the current flows in only one direction.

The folded dipole is analogous to extending the length of each arm from $\lambda/4$ to $\lambda/2$, and then folding the extended dipole at the $\lambda/4$ point by 180 degrees physically. The folded section is then terminated at a short to ground, and the $\lambda/4$ point, is a virtual open circuit. Accordingly, Equation (1) shows that the current of the folded dipole is half of the current of a dipole, as the same current of the dipole is distributed among the two sections, whilst Equations (2A) and

(2B) define the power of the folded dipole and the dipole, respectively. Assuming equal power, the result is that the impedance of the folded dipole is transformed according to Equation (3).

$$2I_f = I_D \qquad\qquad (1)$$

$$P_f = \frac{1}{2}I_f^2 Z_f$$

$$(2A)$$

$$P_D = \frac{1}{2}I_D^2 Z_D$$

$$(2B)$$

$$Z_f = 4Z_D \qquad\qquad (3)$$

Accordingly, the performance of folded dipole can be obtained by decomposition into its two separate modes. The resulting bifilar element, the folded filar of length $\lambda/2$ folded at its midpoint with its distal end shorted to ground results in an increased impedance. This beneficially reduces the requirement of a high-Q match thereby allowing for an antenna element of sufficient bandwidth. Further, folding the filar elements to form the bifilar element coupled with a reduced pitch angle as they rotate around, for example, the cylinder, over a large ground plane, also provides a further benefit as the overall height of the antenna. Accordingly, the height of the antenna is reduced approximately as sine($\theta$) where $\theta$ is the angle of elevation of the helical filar elements relative to the ground plane. Accordingly, for $\theta=45°$ the height is 0.707L (where L is the length of the folded section of filar element, a 30% reduction. If $\theta=30°$ this improves 50% height reduction.

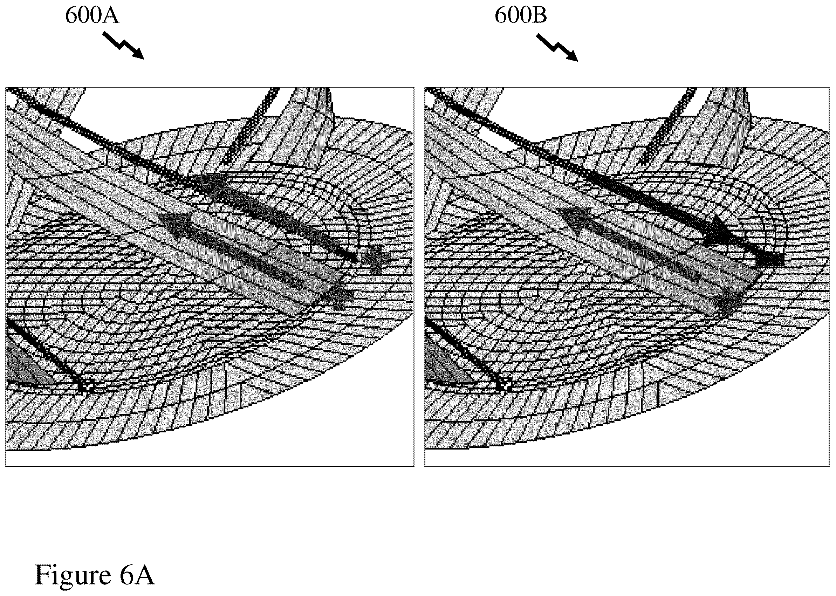

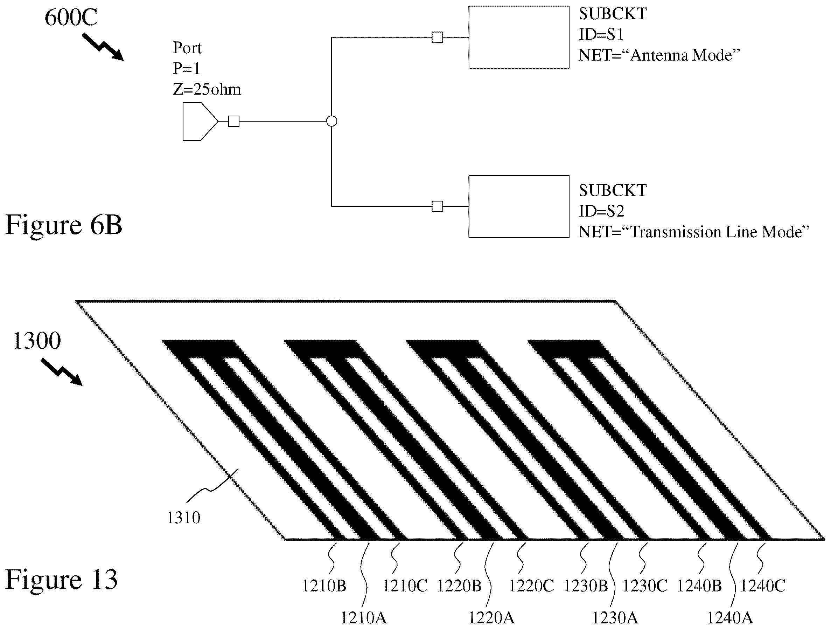

Accordingly, the inventors have modelled the bifilar element using electromagnetic simulation software, e.g., WIPL-D, to establish the decomposition and simulation of the two modes before their impedances are recombined to yield the bifilar element impedance. Referring to Figure 6A in first image 600A the antenna mode simulation is depicted with the two parallel filar elements driven by a pair of generators in phase whereas in second image 600B the transmission line mode is depicted with the two parallel filar elements driven by the pair of generators which are now in anti-phase. Third image 600C in Figure 6B depicts the equivalent parallel circuit model for the bifilar antenna element wherein a port of impedance 25 ohms is coupled to a pair of parallel sub-circuits (SUBCKTs) S1 and S2 representing the antenna and transmission line modes, respectively. As is evident from the following simulations the equivalent circuit model matches a full electromagnetic simulation result well. The equivalent circuit being accurate so long as the pair of conductors of the bifilar element are closely spaced.

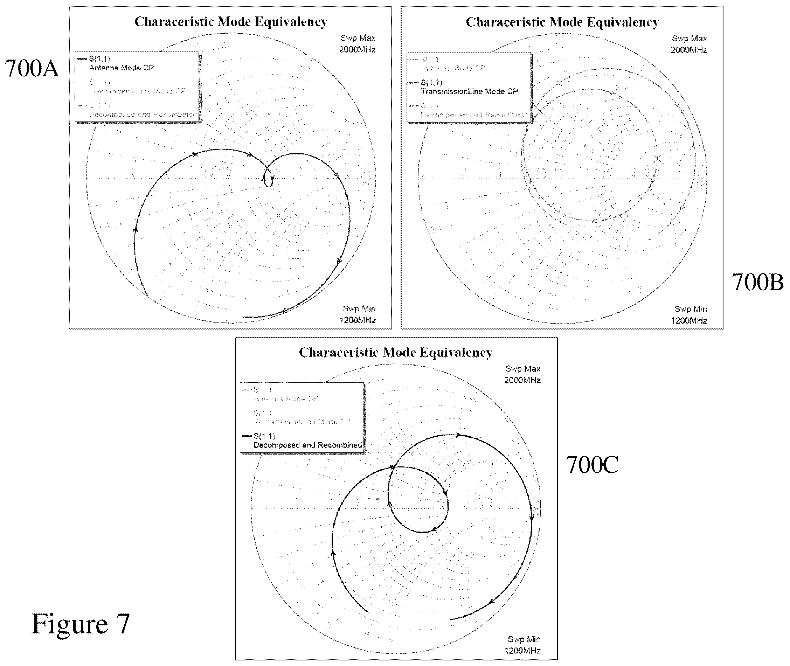

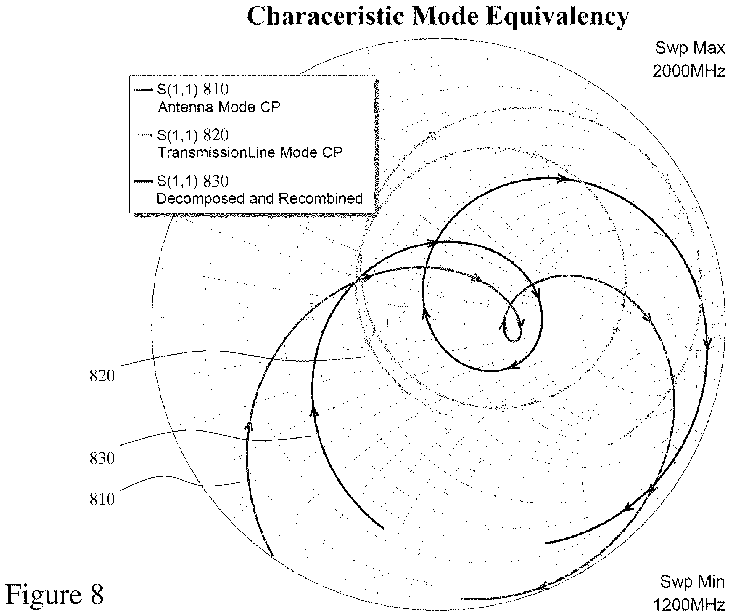

In order to verify the theory of the folded monopole for the helical structure the inventors established a simulation comprising a pair of bifilar elements, each pair driven in anti-phase and both pairs driven with a 90° phase difference so as to create a circular polarization. As evident from Figure 8 this also follows closely to the theory described above. Referring to Figure 7 there are depicted first and second images 700A and 700B respectively for the bifilar antenna element impedance in the antenna mode and transmission line mode, respectively. These being the simulated impedances of the pair of parallel sub-circuits discretely. Third image 700C depicts the combination of these. These are depicted overlaid on the same chart in Figure 8 with Antenna Mode 810, Transmission Mode 820 and Antenna 830 being the decomposed and recombined simulation results.

Finally, in Figure 9 the decomposed and recombined antenna, S(1,1) Decomposed and Recombined 920, is compared with a simulation when the bifilar antenna element is driven normally, i.e., with one end driven by the signal, and the folded end shorted to ground. This being S(1,1) Folded Antenna 910. This solidifies the inventors design concept where these helical bifilar elements operate as folded monopoles.

The impedance transformation factor, $\gamma$, for a bifilar element according to an embodiment of the invention comprising two cylindrical conductors having different radii and a separation distance between them is given by Equation (4) below where the variable "$u$" is the ratio of the feed width to the folded width, and the variable "$v$" is the ratio of the gap between the sections and the feed width. Accordingly, it is evident that the transformer ratio can be changed by changing one or both bifilar elements dimensions and/or adjusting the separation between the bifilar elements.

$$\gamma = \frac{cosh^{-1}\left(\frac{v^2-u^2+1}{2v}\right)}{cosh^{-1}\left(\frac{v^2+u^2-1}{2uv}\right)} \qquad (4)$$

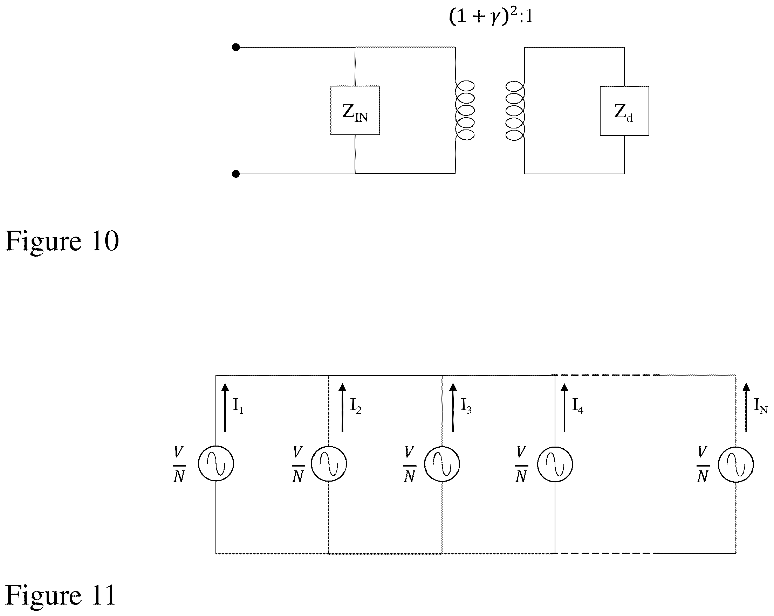

Figure 10 depicts the impedance transformer circuit of the bifilar element between the source impedance, ZIN, the load impedance, ZD, where the transformer ratio is given by Equation (5).

$$(1 + \gamma)^2 : 1 \qquad (5)$$

Within the preceding description the filar element according to an embodiment of the invention has been described and depicted as a bifilar element. However, the design can be extended to a multi-filar element with N elements. This being depicted in Figure 11 wherein there are now N parallel sections, each with source voltage V/N generating currents $I_1$ to IN. Accordingly, the input impedance is given by Equation (6) where it is evident that it scales as the square of the number of elements within the multi-filar element.

$$Z_{IN} = N^2 Z_D \qquad (6)$$

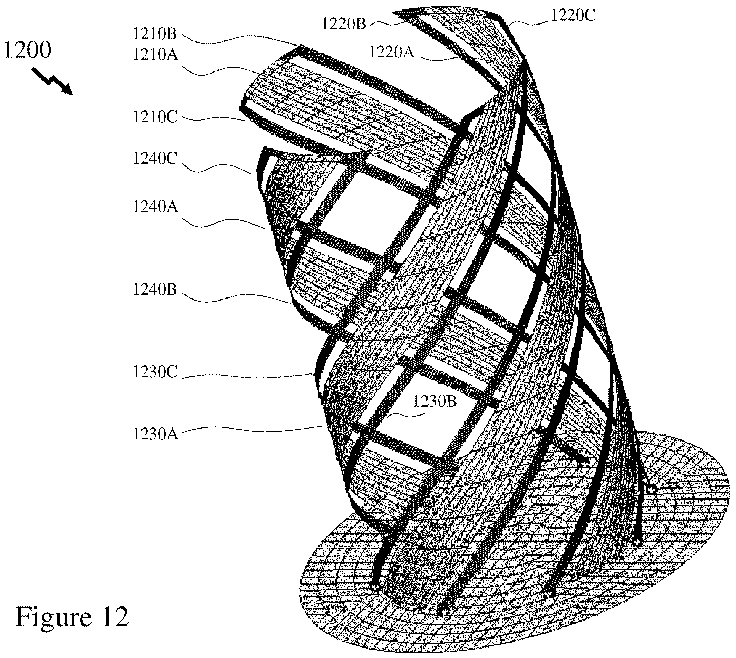

By applying these design guidelines to a series of antenna geometries the inventors established that for their specification requirements that N=3 provided the required performance. Accordingly, such a design has an element coupled at one end to a microwave FP and then a pair of folded elements coupled to the distal end of the element which then are shorted to ground. Where the ground plane is disposed as part of a circuit board or other carrier upon which the antenna is formed then the pairs of folded elements are coupled back to ground at the bottom of the structure being electrically connected to the distal end of the element coupled to the FP at the top of the antenna structure as depicted, for example in Figure 12. This tri-filar element design providing the required input impedance to allow for a wide bandwidth response.

Referring to Figure 12 there is depicted a tri-filar element quad antenna structure comprising four tri-filar elements disposed in circular arrangement with helical winding of the individual multi-filar elements. Accordingly, Antenna 1200 comprises:

- First multi-filar element comprising first central element 1210A with first and second first outer elements 1210B and 1210C disposed either side of the first central element 1210A;
- Second multi-filar element comprising second central element 1220A with first and second second outer elements 1220B and 1220C disposed either side of the second central element 1220A;

- Third multi-filar element comprising third central element 1230A with first and second third outer elements 1230B and 1230C disposed either side of the third central element 1230A; and
- Fourth multi-filar element comprising fourth central element 1240A with first and second fourth outer elements 1240B and 1240C disposed either side of the fourth central element 1240A.

Figure 13 depicts a carrier 1300 for such an antenna structure showing, prior to being wrapped into the cylindrical shape, the four tri-filar structures upon a carrier 1310. Accordingly, the carrier 1310, e.g., a flexible PCB substrate, is patterned with:

- First multi-filar element comprising first central element 1210A with first and second first outer elements 1210B and 1210C disposed either side of the first central element 1210A;
- Second multi-filar element comprising second central element 1220A with first and second second outer elements 1220B and 1220C disposed either side of the second central element 1220A;
- Third multi-filar element comprising third central element 1230A with first and second third outer elements 1230B and 1230C disposed either side of the third central element 1230A; and
- Fourth multi-filar element comprising fourth central element 1240A with first and second fourth outer elements 1240B and 1240C disposed either side of the fourth central element 1240A.

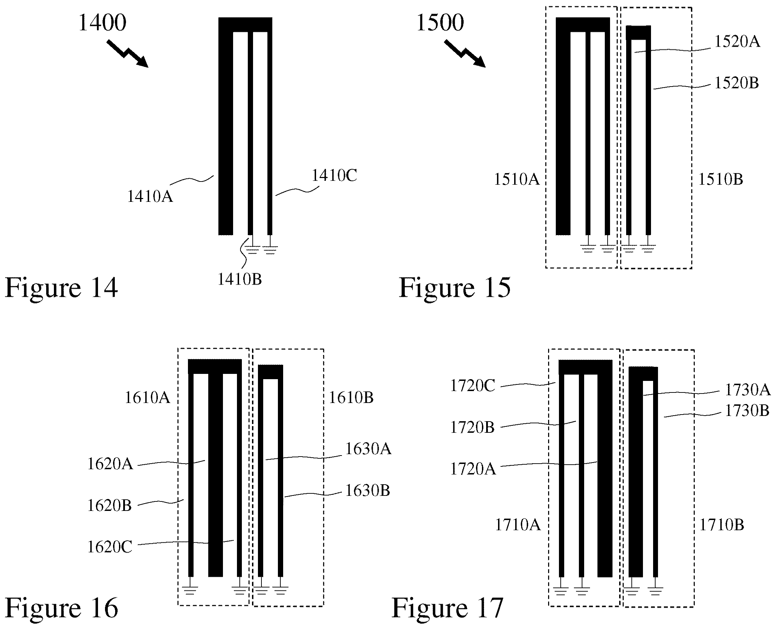

Now referring to Figure 14 there is depicted a tri-filar antenna element 1400 according to an embodiment of the invention wherein the first element 1410A is connected at its distal end to the second and third elements 1410B and 1410C respectively which are coupled to ground to form the antenna element. However, in contrast to the tri-filar element depicted in Figures 12 and 13 the tri-filar antenna element 1400 has the second and third elements 1410B and 1410C respectively disposed on one side rather than the first element 1410A being between them.

Now referring to Figure 15 there is depicted a dual band multi-filar antenna element 1500 according to an embodiment of the invention wherein a first multi-filar antenna element 1510A is electromagnetically coupled to a second multi-filar antenna element 1510B. The first multi-filar antenna element 1510A comprising a structure such as depicted with tri-filar antenna element 1400 in Figure 14. The second multi-filar antenna element 1510B comprises a first element 1520A and second element 1520B which are both coupled to ground at their lower ends whilst being electrically connected at their upper ends. Accordingly, the first element 1520A and second element 1520B function as a folded monopole as discussed and described above but due to the different electrical length of this relative to first multi-filar antenna element 1510A the second multi-filar antenna element 1510B has a different operating frequency.

Considering, the dual band multi-filar antenna element 1500 as a transmitting structure then the first multi-filar antenna element 1510 is coupled to a microwave feed point and receives signals at both the operating frequency of the first multi-filar antenna element 1510A and the second multi-filar antenna element 1510B. The first multi-filar antenna element 1510A therefore operates at the first frequency of the dual band multi-filar antenna element 1500 whilst the electrical signals for the second multi-filar antenna element 1510B are radiatively coupled from the first multi-filar antenna element 1510A to the second multi-filar antenna element 1510B.

As a receiver then the second multi-filar antenna element 1510B receives signals at the second operating frequency of the dual band multi-filar antenna element 1500 wherein these are radiatively coupled from the second multi-filar antenna element 1510B to the first multi-filar antenna element 1510A and therein to the microwave feed-point. The first multi-filar antenna element 1510A receives signals at the first operating frequency of the dual band multi-filar antenna element 1500 and couples these to the microwave feed-point.

Now referring to Figure 16 there is depicted a dual band multi-filar antenna element 1600 according to an embodiment of the invention wherein a first multi-filar antenna element 1610A is electromagnetically coupled to a second multi-filar antenna element 1610B. The first multi-filar antenna element 1610A comprising a structure such as depicted with the tri-filar antenna elements in Figures 12 and 13. Accordingly, the first multi-filar antenna element 1610A comprises a first element 1620A disposed between second and third elements 1620B and 1620C, respectively. The first element 1620A is coupled to a microwave feed-point at this lower end and electrically connected to the second and third elements 1620B and 1620C at its other distal end. Each of the second and third elements 1620B and 1620C being coupled at their other end from that connected to the first element 1620A to ground. The second multi-filar antenna element 1610B comprises a first element 1620A and second element 1620B which are both coupled to ground at their lower ends whilst being electrically connected at their upper ends.

Now referring to Figure 17 there is depicted a dual band multi-filar antenna element 1700 comprising a first multi-filar antenna element 1710A and a second multi-filar antenna element 1720B. The first multi-filar antenna element 1710A comprising essentially a mirror image of the first multi-filar antenna element 1510A in Figure 15 such that a first element 1720A is disposed to one side of second and third elements 1720B and 1720C, respectively. The lower end of the first element being coupled to a microwave feed-point, the lower ends of the second and third elements 1620B and 1620C being coupled to ground, and the distal end of the first element 1720A being coupled to the distal ends of the second and third elements 1620B and 1620C, respectively. In contrast, to the preceding designs the first element 1730A of the second multi-filar antenna element 1730B is depicted with a similar wider geometry to that of first element 1720A of the first multi-filar antenna element 1720B.

Whilst within Figures 15 to 17 the second element operating at a different operating frequency is depicted as having electrical tracks of different physical length to those of the first element it would be evident that as it is the electrical length of the two elements that defines their operating frequency that this electrical length imbalance may be introduced through other variations between the pair of elements such as their geometry and effective dielectric constant for example. For a common carrier, the physical length is simple to implement but it is not unique control of the electrical length.

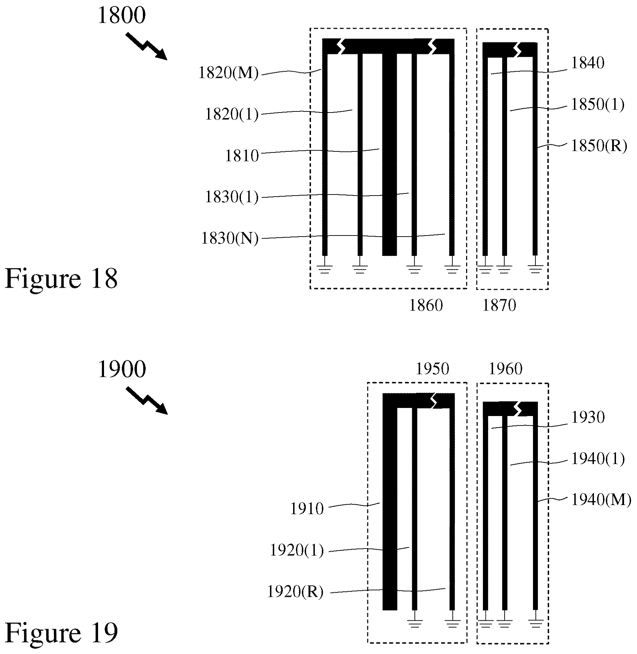

As noted above the folded dipole structure can be extended from 2 or 3 elements to N elements. Accordingly, referring to Figure 18 there is depicted a dual band multi-filar antenna element 1800 comprising a first multi-filar antenna element 1860 for operating over a first frequency range and a second multi-filar antenna element 1870 for operating over a second frequency range. As depicted the first multi-filar antenna element 1860 comprising:

- Central element 1810 which is coupled to a microwave feed-point at its lower end;
- First to M first lateral elements 1820(1) to 1820(M) disposed to the left-hand side of the central element 1820; and
- First to N second lateral elements 1830(1) to 1830(N) disposed to the right hand side of the central element 1820.

The first to M first lateral elements 1820(1) to 1820(M) and the first to N second lateral elements 1830(1) to 1830(N) being each coupled at one end to ground and at their other end to the upper end of the central element 1810. Within embodiments of the invention M is a positive integer, $M \geq 1$; N is a positive integer $N \geq 1$; whilst within embodiments of the invention M=N or $M \neq N$.

As depicted the second multi-filar antenna element 1870 comprises:

- First element 1840 which is coupled to ground at one end; and
- First to R lateral elements 1850(1) to 1850(R) disposed to the right hand side of the first element 1820.

Within Figure 18 the lengths of first to M first lateral elements 1820(1) to 1820(M) and the lengths of the first to N second lateral elements 1830(1) to 1830(N) are depicted as equal. However, within embodiments of the invention as depicted in Figure 20 these may be adjusted to account for the additional electrical path between their distal ends as coupled to the upper ends of the central element 1810 and first element 1840, respectively.

Accordingly, referring to Figure 19 there is depicted a dual band multi-filar antenna element 1900 comprising a first multi-filar antenna element 1950 for operating over a first frequency range and a second multi-filar antenna element 1960 for operating over a second frequency range. As depicted the first multi-filar antenna element 1860 comprising:

- Main element 1910 which is coupled to a microwave feed-point at its lower end; and

- First to R first lateral elements 1920(1) to 1920(R) disposed to the right-hand side of the central element 1820.

The first to R first lateral elements 1920(1) to 1920(R) being each coupled at one end to ground and at their other end to the upper end of the main element 1910. Within embodiments of the invention R is a positive integer, $R \geq 1$. As depicted the second multi-filar antenna element 1960 comprises:

- First element 1930 which is coupled to ground at one end; and
- First to M second lateral elements 1940(1) to 1940(M) disposed to the right hand side of the first element 1930.

Within Figure 19 the lengths of first to R first lateral elements 1920(1) to 1920(R) and the lengths of the first to M second lateral elements 1940(1) to 1940(M) are depicted as equal. However, within embodiments of the invention as depicted in Figure 20 these may be adjusted to account for the additional electrical path between their distal ends as coupled to the upper end of the main element 1910 and first element 1930, respectively.

Now referring to Figure 20 there are depicted first to fourth schematics 2000A to 2000D respectively depicting exemplary physical geometries for multi-filar elements to account for the electrical length of the interconnection from a main element to the other elements of the multi-filar element. In each schematic a structure for a multi-filar antenna element comprising a microwave feed-point is depicted although it would be evident that the same principles may be applied to a radiatively coupled multi-filar element where all elements are coupled to ground at one end. Referring to first and second schematics 2000A and 2000B the electrical tracks differ at their distal ends from the ground plane. In third schematic 2000C the electrical tracks differ in their ends by adjusting the position of the ground plane. In fourth schematic 2000D the electrical tracks are parallel but "diverge"/"converge" to a common points at the ground plane. Within these schematics and others these offsets are typically depicted exaggerated with respect to physical designs to allow one of skill in the art to visualize the geometries discussed.

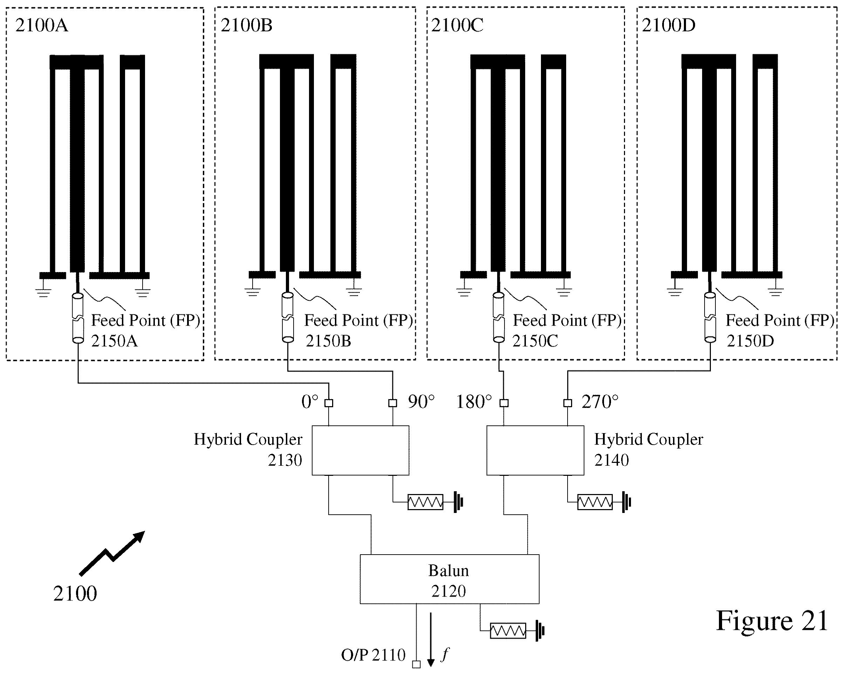

Now referring to Figure 21 there is depicted a schematic 2100 of an exemplary microwave / RF circuit and antenna employing four dual multi-filar elements each having a filar node coupled to microwave / RF feed point according to an embodiment of the invention. Accordingly, within schematic 2100 are depicted first to fourth filar antenna elements 2100A to 2100D respectively which are depicted as being of similar design to that depicted in Figure 15 with capacitive series reactance between the first to fourth feed points (FPs) 2150A to 2150D respectively and the respective first to fourth filar antenna elements 2100A to 2100D. Accordingly, first to fourth FPs 2150A to 2150D respectively may be a connection to a microwave feed circuit or microwave combiner circuit such as through discrete microwave or RF cables or a circuit board for example. First and second filar antenna elements 2100A and 2100B are coupled via first and second FPs 2150A and 2150B respectively to first hybrid coupler 2130. Third and fourth filar antenna elements 2100C and 2100D are coupled via third and fourth FPs 2150C and 2150D respectively to second hybrid coupler 2140.

A first output of the first hybrid coupler 2130 is coupled to Balun 2120 whilst a second output of the first hybrid coupler 2130 is terminated with a load resistance. A first output of the second hybrid coupler 2140 is coupled to Balun 2120 whilst a second output of the second hybrid coupler 2140 is terminated with a load resistance. Similarly, a first output of the Balun 2120 is coupled to an output port whilst a second output of the Balun 2120 is optionally terminated in a load resistance. Accordingly, considering a filar antenna employing first to fourth antenna elements 2100A to 2100D respectively formed upon a flexible circuit board or carrier and wound into a cylinder then these receive couple four sets of received microwave / RF signals which are combined through the first and second hybrid couplers 2130 and 2140 and Balun 2120 to generate an output signal at the output port 2110. Where the microwave / RF signals have relative phases received by the first to fourth antenna elements have a relative phase difference sequentially of 0°, 90°, 180°, and 270° then these signals are initially combined within each of first and second hybrid couplers 2130 and 2140 and then within the Balun 2120 to generate an output signal. The output ports of the first and second hybrid couplers 2130 and 2140 being those summing the inputs whilst the other output ports terminated with load resistors represent the ports yielding the difference between the two inputs. Alternatively, the reverse scenario results in an input signal coupled to the Balun 2120 being initially split into two signals 180° out of phase with respect to one another which are then coupled to the first and second hybrid couplers 2130 and 2140 respectively which each generate a pair of signals with 90° relative phase such that the circuit provides four output signals at relative phase difference sequentially of 0°, 90°, 180°, and 270° which are then radiated by the first to fourth antenna elements 900A to 900D respectively combining to generate a circularly polarized signal from the antenna. Accordingly, when employed as a receiver the antenna receives circularly polarized signals. Embodiments of the invention according to the sequence of phases implemented may operate to receive and/or transmit left hand circularly polarized signals or right hand polarized signals. Optionally, within other embodiments of the invention the Balun 2120 may be a transformer.

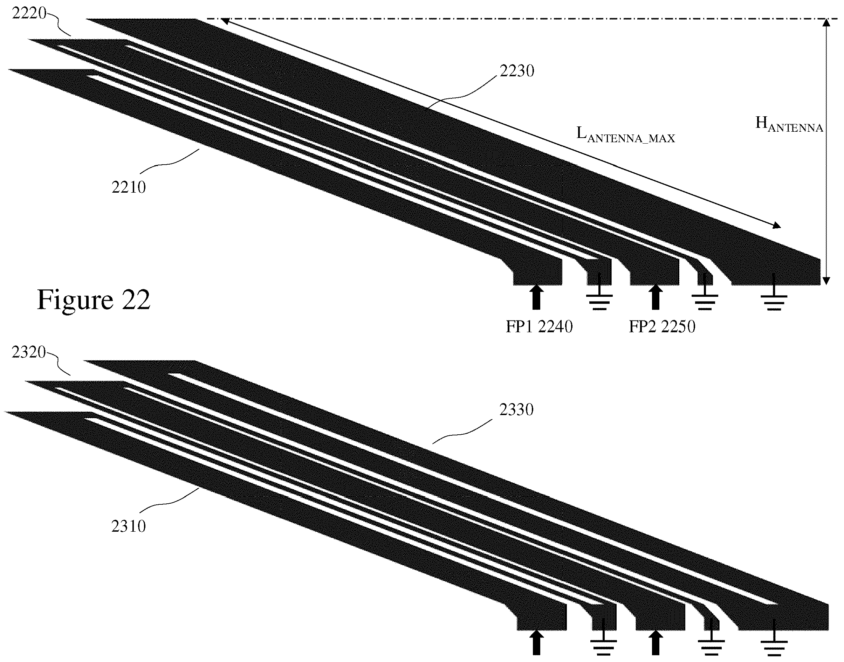

Referring to Figures 22 and 23 there are depicted schematics of tiple band antenna elements wherein the triple band filar elements are angled, such as depicted in Figures 1B-2B, 12 and 29 exploiting techniques described above and as depicted in respect of Figures 2A-21, respectively. Within Figure 22 a bifilar Antenna Element 2210 is depicted, such as bifilar elements 210 to 240 in Figure 2A where the bifilar Antenna Element 2210 comprises an initial filar element extending from a feed point (FP1 2240) to its distal end and therein a return filar element extending from the distal end of the initial filar element to a ground contact. Disposed adjacent to the first bifilar Antenna Element 2210 is a trifilar Antenna Element 2220 which similarly comprises another initial filar element extending from a feed point (FP2 2250) to its distal end and therein a pair of return filar elements on either side of the initial filar element extending from the distal end of the initial filar element. Of the pair of return filar elements one is coupled to the same ground contact as the bifilar Antenna Element 2210 although it may alternatively return to a different ground contact whilst the other return filar element is coupled to a separate ground. The trifilar Antenna Element 2220 is disposed between the bifilar Antenna Element 2210 and a filar Antenna Element 2230. The filar Antenna Element 2230 being coupled to ground at one end.

Accordingly, microwave/RF signals at a first range of frequencies, e.g., 1.563-1.587 GHz (GPS L1 band) are coupled to or from FP1 2240 of the bifilar Antenna Element 2210 and therein either are radiated or were received by the bifilar Antenna Element 2210. Similarly, microwave/RF signals at a second range of frequencies, e.g., 1.215-1.2396 GHz (GPS L2 band) are coupled to or from FP2 2250 of the trifilar Antenna Element 2220 and therein either are radiated or were received by the trifilar Antenna Element 2220.

Microwave/RF signals at a third range of frequencies, e.g., 1.164-1.189 GHz (GPS L5 Band) are similarly coupled to or from the FP2 2250 but are either radiated by or were received by the filar Antenna Element 2230 wherein the trifilar Antenna Element 2220 and filar Antenna Element 2230 are electromagnetically coupled to one another.

As evident from Figure 21 the bifilar Antenna Element 2210, operating at the highest frequency range (e.g., GPS L1) is shorter than the trifilar Antenna Element 2220, operating at an intermediate frequency range (e.g., GPS L2), and these are both shorter than the filar Antenna Element 2230 operating at the lowest frequency range (e.g., GPS L5). Accordingly, the longest filar element is defined by the filar Antenna Element 2230 and is denoted as having a length $L_{ANTENNA\_MAX}$. Due to the angling of the filar elements of the bifilar Antenna Element 2210, trifilar Antenna Element 2220, and filar Antenna Element 2230 the height of the triple-band antenna, $H_{ANTENNA}$, is less than $L_{ANTENNA\_MAX}$.

Figure 23 depicts a similar triple band antenna comprising a bifilar Antenna Element 2310, trifilar Antenna Element 2320 and filar Antenna Element 2330. However, in contrast to the filar Antenna Element 2230 in Figure 22 the filar Antenna Element 2330 in Figure 23 has a slot disposed within it along a portion of its length.

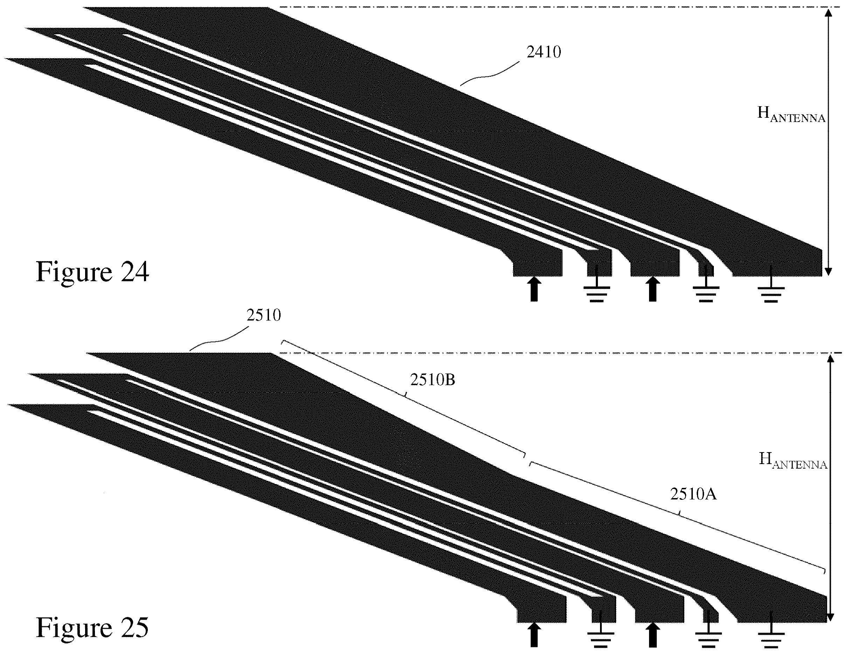

Now referring to Figures 24 to 27 there are depicted triple band antenna elements according to embodiments of the invention representing variants of the designs depicted in Figures 22 and 23. Due to the operating performance requirements of the triple-band antenna elements depicted in Figure 22 and 23 it may be beneficial to increase length of the filar Antenna Element 2230 thereby shifting its operating frequency. However, increasing $L_{ANTENNA\_MAX}$ for a fixed slant angel of the antenna element results in an increase in $H_{ANTENNA}$. In some design instances increasing the slant angle, i.e. such that the filar elements are at a higher angle relative to the vertical from the ground plane (i.e. leaning over further or have a lower angle relative to the ground plane) may be difficult and accordingly it would be beneficial to provide designers of antenna with antenna elements that increased the effective electrical length of the filar element without increasing the physical height of the resulting antenna.

In Figure 24 the filar element 2410 tapers uniformly from a first width at an end coupled to ground to a second width at its distal end. Accordingly, the microwave/RF signals coupled to the filar element 2410 are coupled to a filar element with increased physical path length albeit with constant $H_{ANTENNA}$. This arises as the microwave/RF signals coupled to the filar element "travel" or propagate in the outer edges of the filar element.

Now referring to Figure 25 the filar element 2510 according to an embodiment of the invention comprises a first Section 2510A and a second Section 2510B. The filar element within the first Section 2510A has a constant width whilst the second Section 2510B tapers from the width of the first Section 2510A to a wider width at its distal end from the first Section 2510A. Second Section 2510B comprising a linear taper. Within embodiments of the invention the ratio of the first Section 2510A to the second Section 2510B as well as the width of the first Section 2510A and the width of the distal end of the second Section 2510B may vary according to the desired adjustment in the effective length of the filar element required without adjusting the antenna height for constant slant angle.

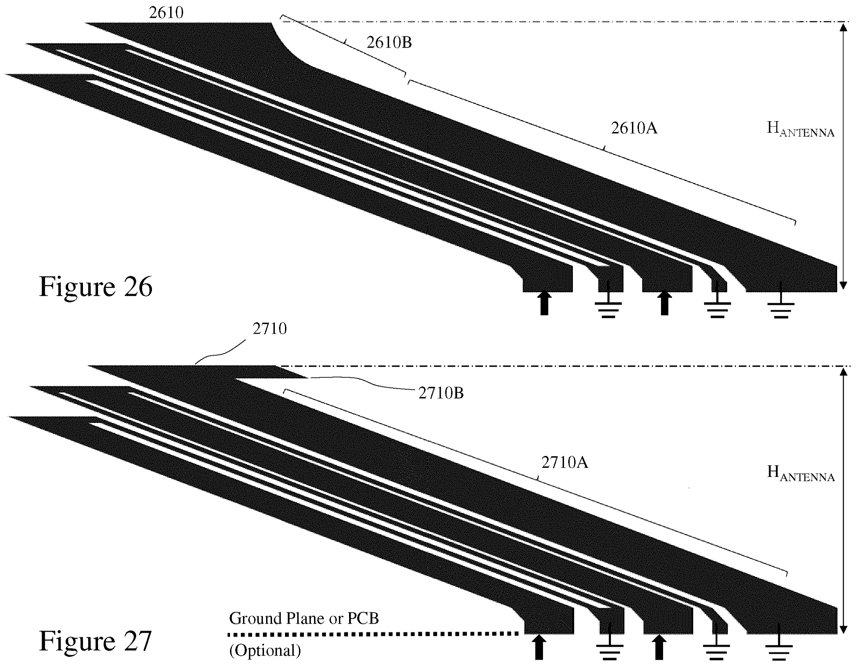

Referring to Figure 26 the filar element 2610 according to an embodiment of the invention now comprises a first Section 2610A and a second Section 2610B where the first Section 2610A has a constant width whilst the second Section 2610B tapers from the width of the first Section 2610A to a wider width at its distal end from the first Section 2610A. Second Section 2610B comprising a non-linear taper, e.g., it may be defined by a mathematical formula. Within embodiments of the invention the ratio of the first Section 2610A to the second Section 2610B as well as the width of the first Section 2610A and the width of the distal end of the second Section 2610B may vary according to the desired adjustment in the effective length of the filar element required without adjusting the antenna height for constant slant angle.

Now referring to Figure 27 the filar element 2710 according to an embodiment of the invention comprises a first Section 2710A and a second Section 2710B. The filar element within the first Section 2710A has a constant width as does the second Section 2710B which may be the same or different to the width of first Section 2710A. As depicted the width of the second Section 2710B is narrower than the width of the first Section 2710A. Within other embodiments of the invention the first Section 2710A and/or second Section 2710B may alternatively comprise a linear taper or a non-linear taper (e.g., be defined by a mathematical formula). Within embodiments of the invention the ratio of the first Section 2710A to the second Section 2710B may vary according to the desired adjustment in the effective length of the filar element required without adjusting the antenna height for constant slant angle.

Accordingly, the first Section 2710A is at a first angle relative to a plane, e.g., that of a PCB or a ground plane (such as depicted in Figure 27 as being optionally present) whilst the second Section 2710B is at a second angle relative to the plane. In Figure 27 the second Section 2710B is depicted parallel to the plane but it would be evident to one of skill in the art that other angles such that the second Section 2710B may have a positive angle relative to the plane (i.e. similar to the first Section 2710A) or a negative angle such that it gets closer to the plane the further from its junction with the first Section 2710A.

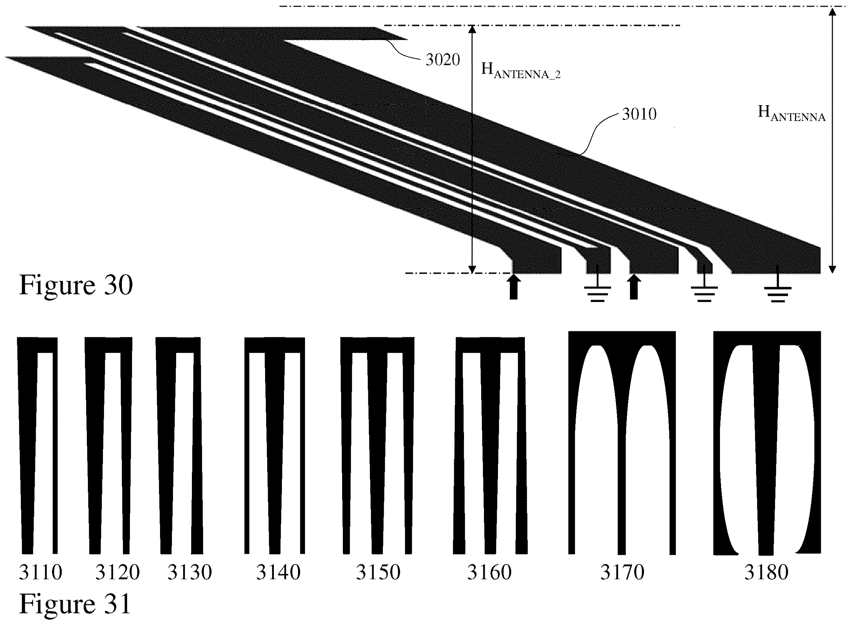

Referring to Figure 30 this concept is extended such that the second Section 3020 is now longer than that depicted in Figure 27 such that the resulting combination of the first Section 3010 and second Section 3020 is a longer filar antenna element but the height of the triple band antenna element is now reduced, e.g. $H_{ANTENNA\_2} < H_{ANTENNA}$. Accordingly, the antenna can be reduced in height further.

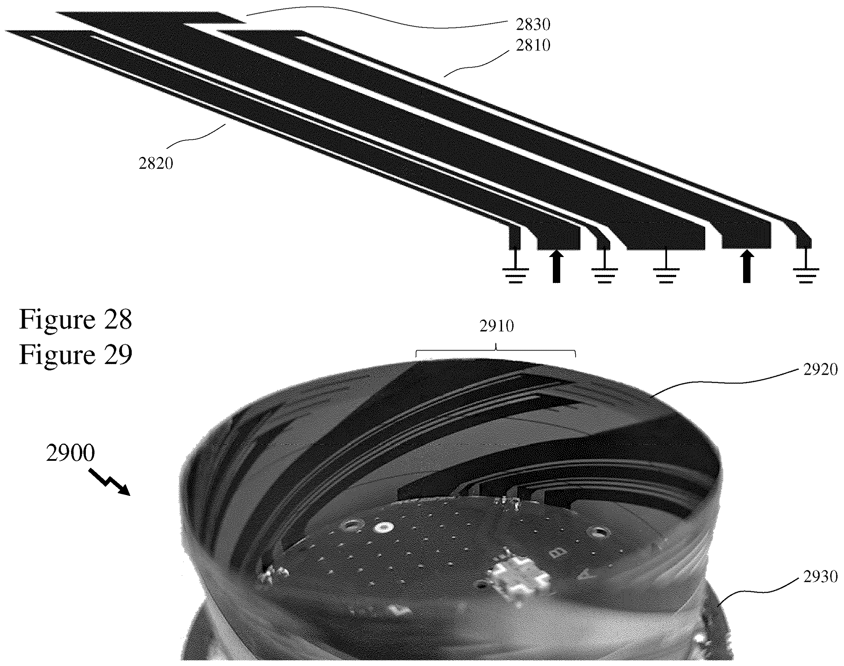

Now referring to Figure 28 there is depicted a triple band antenna element according to an embodiment of the invention representing a variant of the design depicted in Figure 27 wherein the sequence of filar elements is varied minimizing a "footprint" of the antenna element. Accordingly, the filar Antenna Element 2830 is now disposed between the bifilar Antenna Element 2810 and the trifilar Antenna Element 2820. As noted above in respect of Figure 22 the bifilar Antenna Element 2810 operates at a higher frequency range than filar Antenna Element 2830 and accordingly has a shorter length. Accordingly, dependent upon the operating frequency range of the filar Antenna Element 2830 and bifilar Antenna Element 2810 together with the pair of sections of the filar Antenna Element 2830 the bifilar Antenna Element 2810 (or other multi-filar element designed to the same frequency range) may "fit" within the footprint of the filar Antenna Element 2830 such that the "footprint" of the triple band antenna element is reduced. This may be beneficial when the slant of the antenna elements is reduced thereby allowing reduced diameter of a carrier for multiple antenna elements such as depicted in Figures 1B-2B and 12 relative to the larger diameter / lower height carrier depicted in Figure 29.

Whilst the embodiments of the invention depicted in Figure 24 employs a single section and those of Figures 25-28 and 30 two sections that other embodiments of the invention may employ three or more sections.

Further, it would be evident that the embodiments of the invention as depicted in Figures 24-28 have been applied to a filar Antenna Element with a single filar element. However, these embodiments of the invention may be applied to multi-filar elements. For example, referring to Figure 31 there are depicted examples of these filar tapering concepts applied to bifilar and trifilar antenna elements although it would be evident that these design variations may be applied with multi-filar elements comprising 2, 3, 4 or more filar elements. Accordingly, within Figure 31 there are depicted first to eighth multi-filar elements 3110 to 3180 respectively, these comprising:

- First multi-filar element 3110 wherein the left filar element tapers linearly in a single section but the "return" filar element is constant width;
- Second multi-filar element 3120 wherein the left filar element tapers linearly in a single section whilst the "return" filar element similarly tapers linearly in the same sense, i.e., narrower at the bottom;
- Third multi-filar element 3130 wherein the left filar element tapers linearly in a single section whilst the "return" filar element similarly tapers linearly but in the opposite sense, i.e., wider at the bottom;
- Fourth multi-filar element 3140 wherein the central filar element tapers linearly in a single section but the "return" filar elements either side are constant width;
- Fifth multi-filar element 3150 wherein the central filar element tapers linearly in a single section but the "return" filar elements either side taper linearly in the same sense, i.e., narrower at the bottom;
- Sixth multi-filar element 3160 wherein the central filar element tapers linearly in a single section but the "return" filar elements either side taper linearly but in the opposite sense, i.e., wider at the bottom;
- Seventh multi-filar element 3170 wherein the central filar element comprises two sections, one constant width and the other with non-linear taper where the "return" filar elements either side taper in the same manner and same sense, i.e., one constant width section and another section with non-linear taper where all filar elements are narrower at the bottom; and
- Eighth multi-filer element 3180 wherein the central filar element comprises two sections, one constant width and the other with a linear taper, whilst the "return" filar elements either side taper in two sections, both of which are non-linear tapers.

Whilst the tapers depicted in first to seventh multi-filar elements 3110 to 3170 respectively are the same it would be evident that within other embodiments of the invention different taper geometries may be applied to each filar element such as depicted in eighth filar element 3180.

Within Figures 1 to 28 the filar antenna elements and antennas employing them exploit one or more filar elements which are coupled to a feed point and are disposed relative to a ground plane without or without capacitors disposed between all or some of the filar elements and the ground plane. Within embodiments of the invention this ground plane may be formed, for example, on one side of or upon a layer of a printed circuit board or electronic circuit, flexible PCB, or an equivalent, hereinafter referred to as a PCB for ease of reference. Within embodiments of the invention the filar elements are mechanically and/or electrically coupled to the other side of the PCB to that on which the ground plane is formed or upon a side of the PCB when the ground plane is formed by a layer within the PCB. Accordingly, the PCB may be a single or multi-layer circuit providing contacts for electrical attachment of each of the filar antenna elements and therein the individual filar elements. Further, the PCB may support either integrated within it or attached to it capacitors to provide the capacitive series reactance from the feed points to the first filar elements as well as , optionally, the capacitors disposed between the filar elements where multiple filar elements are employed and capacitors coupling filar elements to the ground plane.

Accordingly, with respect to Figure 21 a microwave receiver and/or microwave transmitter can be coupled to the microwave quadrature feed network through the port. The four feed points feed nodes are connected to the four filar nodes of the filar antenna elements described above wherein these may be spatially located on a former, such as a PCB implementation of the feed network such that phase increases uniformly (e.g., in 90° steps) as a function of position (described by azimuth angle) around the printed circuit board and the feed network provides equal amplitude signals to the four antenna coupling terminals. Each of the filar antenna elements, whether a single filar element based for a single frequency band or multiple filar element based for multiple frequency band operation may exploit a former such as the plastic carrier of a flexible microwave circuit for example allowing the four elements to be formed upon a single former providing ease of handling, enhanced material considerations etc. This former may be formed into the cylinder for example.

Figure 29 depicts an example of a physical Antenna 2900 employing four triple band Antenna Elements 2910, each according to an embodiment of the invention as depicted in Figure 24, to provide a circularly polarized GNSS antenna. The four triple band Antenna Elements 2910 being disposed at four locations around the PCB 2930 to provide signals at 0°, 90°, 180° and 270° respectively. The four triple band antenna elements 2910 being formed upon a Carrier 2920. Accordingly, each of the Antenna Elements 2910 implements one of first to fourth antenna elements 2100A to 2100D in Figure 21 whilst the PCB 2930 integrates the Balun 2120, first hybrid coupler 2130 and second hybrid coupler 2140 as depicted in Figure 21 representing the combining circuit for a receiver or splitting circuit for a transmitter.

As discussed above the triple band Antenna Elements 2910 are disposed at an angle less than 90° (i.e., perpendicular) to the PCB 2930 so that the height of the resulting Antenna 2900 is less than the physical length of the filar antenna elements. However, it would be evident to one of skill in the art that the Antenna 2900 may be implemented with a range of physical geometries wherein as the angle of the triple band Antenna Elements 2910 is varied from 90° (i.e. perpendicular to the PCB 2930) then the height of the Antenna 2900 reduces but the width of the Carrier 2920 increases and therein the diameter of the assembled Antenna 2900 increases. This being evident from comparing Figures 1B-2B and 12 with Figure 29 wherein the steeper (i.e., higher angle) filar elements of the antenna in Figures 1B-2B and 12 results in a smaller diameter antenna assembly than that in Figure 29 with a shallower (i.e., lower angle) filar elements of the antenna in Figure 29 result in a larger diameter antenna assembly.

Within other embodiments of the invention the former may be designed and formed to provide four antennas evenly distributed around the periphery of a hemispherical surface and form the antennas across this hemispherical surface. Within other embodiments of the invention the former may be designed and formed to provide the four antennas evenly distributed around the surface of a spherical surface and form the antennas across this spherical surface. Within other embodiments of the invention the former may be designed and formed to provide the four antennas evenly distributed around the periphery of a frusto-conical surface and form the antennas across this frusto-conical surface. Within other embodiments of the invention the former may be designed and formed to provide the four antennas evenly distributed around the periphery of a polygonal surface and form the antennas across this polygonal surface. Such a polygonal surface may have 4, 5, 6, 7, 8, etc. sides or other numbers although typically more sides yield lower angular transitions and hence induced stress and/or fatigue.

It would be evident to one of skill in the art that the filar elements are electrical conductors (conductors) formed from a suitable conductive material or combination of conductive materials in alloy and/or layered form. Such conductive materials may include, but not be limited to, copper, gold, silver, aluminum, titanium, tungsten, platinum, palladium, and zinc.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Further aspects or embodiments of this disclosure are described in the following numbered clauses:

1. A filar antenna comprising:

a ground plane;
a feed point proximate the ground plane; and
a first filar element comprising:

a first element having a first end electrically coupled to the feed point and a second distal end;
a second element having a first end electrically coupled to the ground plane and a second distal end; and
a third element having a first end electrically coupled to the ground plane and a second distal end; wherein

the second distal end of the second element is electrically connected to the second distal end of the first element;
the second distal end of the third element is electrically connected to the second distal end of the first element;
a first electrical length from the feed point to the ground plane via the first element and the second element is established in dependence upon a multiple of a half wavelength of a first operating frequency of the first filar element; and
a second electrical length from the feed point to the ground plane via the first element and the second element is established in dependence upon the same multiple of a half wavelength of a first operating frequency as that of the first electrical length.

2. The filar antenna according to clause 1, wherein an electrical length of each of the first element, the second element, and the third element are established in dependence upon an odd multiple of a quarter wavelength of the first operating frequency of the first filar element.

3. The filar antenna according to clause 1, wherein: the first filar element is either attached to a carrier or supported by the carrier; and the carrier is shaped to a predetermined geometry; and the first element, the second element, and the third element are shaped appropriately such that each trace a helical path from its first end to its second distal end across the carrier.

4. The filar antenna according to clause 1, wherein: the first filar element is either attached to a carrier or supported by the carrier; and the carrier is shaped to a predetermined geometry; the first element, the second element, and the third element are shaped appropriately such that
each trace a helical path from its first end to its second distal end across the carrier; the first element and the second element are separated by a first spacing; and the first element and the third element are separated by a second spacing.

5. The filar antenna according to clause 1, wherein either: the first element is disposed between the second element and the third element; or: the first element is disposed to one side of both the second element and the third element.

6. The filar antenna according to clause 1, further comprising a second filar element comprising:

a fourth element having a first end electrically coupled to the ground plane and a second distal end; and
a fifth element having a first end electrically coupled to the ground plane and a second distal end; wherein

the second distal end of the fourth element is electrically connected to the second distal end of the fifth element; a third electrical length from the ground plane to the ground plane via the fourth element and the fifth element is established in dependence upon a multiple of a half wavelength of a second operating frequency of the second filar element; wherein
the second filar element is radiatively coupled to the first filar element.

7. The filar antenna according to clause 6, wherein: an electrical length of each of the fourth element and the fifth element are established in dependence upon an odd multiple of a quarter wavelength of the second operating frequency of the second filar element.

8. The filar antenna according to clause 6, wherein: the first filar element and the second filar element are either attached to a carrier or supported by the carrier; the carrier is shaped to a predetermined geometry; the first element, the second element, and the third element are shaped appropriately such that each trace a helical path from its first end to its second distal end across the carrier; the fourth element and the fifth element are shaped appropriately such that each trace a helical path from its first end to its second distal end across the carrier;
the first element and the second element are separated by a first spacing; the first element and the third element are separated by a second spacing; the fourth element and the fifth element are separated by a third spacing; and the second filar element is disposed at a fourth spacing from the first filar element.

9. A filar antenna comprising:

a feeding network on a circuit board comprising a ground plane and a combining network with a plurality of feed points; and
a filar antenna with an equal plurality of filar nodes, wherein
said combining network comprised of circuit elements effective to constructively sum microwave electrical signals present at each of said feed points, each of said electrical signals having a predetermined relative phase relationship, each of said feed points connected to a corresponding one of said filar nodes;
said filar antenna comprising a plurality of first filar elements arranged around and above the circuit board;
each first filar element of the plurality of first filar elements comprises:

a first element having a first end being a first node of the plurality of filar nodes electrically coupled to a feed point of the plurality of feed points and a second distal end;
a second element having a first end electrically coupled to the ground plane and a second distal end; and
a third element having a first end electrically coupled to the ground plane and a second distal end; wherein

the second distal end of the second element is electrically connected to the second distal end of the first element; the second distal end of the third element is electrically connected to the second distal end of the first element; a first electrical length from the feed point to the ground plane via the first element and the second element is established in dependence upon a multiple of a half wavelength of a first operating frequency of the first filar element; and
a second electrical length from the feed point to the ground plane via the first element and the second element is established in dependence upon the same multiple of a half wavelength of a first operating frequency as that of the first electrical length.

10. The filar antenna according to clause 9, wherein: an electrical length of each of the first element, the second element, and the third element are established in dependence upon an odd multiple of a quarter wavelength of the first operating frequency of the first filar element.

11. The filar antenna according to clause 9, wherein either: the first element is disposed between the second element and the third element; or: the first element is disposed to one side of both the second element and the third element.

12. The filar antenna according to clause 9, wherein: the first filar element is either attached to a carrier or supported by the carrier; and the carrier is shaped to a predetermined geometry; and the first element, the second element, and the third element are shaped appropriately such that
each trace a helical path from its first end to its second distal end across the carrier.

13. The filar antenna according to clause 9, wherein: the first filar element is either attached to a carrier or supported by the carrier; and the carrier is shaped to a predetermined geometry; the first element, the second element, and the third element are shaped appropriately such that each trace a helical path from its first end to its second distal end across the carrier; the first element and the second element are separated by a first spacing; and the first element and the third element are separated by a second spacing.

14. The filar antenna according to clause 9, further comprising: a plurality of second filar elements arranged around and above the circuit board; the plurality of first filar elements and the plurality of second filar elements are alternately arranged around the circuit board; each second filar element of the plurality of second filar elements comprising: a fourth element having a first end electrically coupled to the ground plane and a second distal end; and a fifth element having a first end electrically coupled to the ground plane and a second distal end; wherein the second distal end of the fourth element is electrically connected to the second distal end of the fifth element; a third electrical length from the ground plane to the ground plane via the fourth element and the fifth element is established in dependence upon a multiple of a half wavelength of a second operating frequency of the second filar element; each second filar element of the plurality of second filar elements is radiatively coupled to a predetermined first filar element of the plurality of first filar elements.

15. The filar antenna according to clause 14, wherein: an electrical length of each of the fourth element and the fifth element are established in dependence upon an odd multiple of a quarter wavelength of the second operating frequency of the second filar element.

16. The filar antenna according to clause 14, wherein: the plurality of first filar element and the plurality of second filar elements are either attached to a carrier or supported by the carrier; the carrier is shaped to a predetermined geometry; the first element, the second element, and the third element are shaped appropriately such that each trace a helical path from its first end to its second distal end across the carrier; the fourth element and the fifth element are shaped appropriately such that each trace a helical path from its first end to its second distal end across the carrier; the first element and the second element are separated by a first spacing; the first element and the third element are separated by a second spacing; the fourth element and the fifth element are separated by a third spacing; each second filar element of the plurality of second filar elements is disposed at a fourth spacing from a preceding first filar element of the plurality of first filar elements in the alternate arrangement; and each second filar element of the plurality of second filar elements is disposed at a fifth spacing from a succeeding first filar element of the plurality of first filar elements in the alternate arrangement.

17. A filar antenna element comprising:

a first element having a first end electrically coupled to a feed point for at least one of coupling electrical signals to the feed point or receiving electrical signals from the feed point and second distal end;
a second element having a first end electrically coupled to the a ground plane disposed proximate to the feed point and a second distal end; and
a third element having a first end electrically coupled to the ground plane and a second distal end; wherein the second distal end of the second element is electrically connected to the second distal end of the first element;

the second distal end of the third element is electrically connected to the second distal end of the first element; a first electrical length from the feed point to the ground plane via the first element and the second element is established in dependence upon a multiple of a half wavelength of a first operating frequency of the first filar element; and

a second electrical length from the feed point to the ground plane via the first element and the second element is established in dependence upon the same multiple of a half wavelength of a first operating frequency as that of the first electrical length.

18. The filar antenna element according to clause 17, wherein: an electrical length of each of the first element, the second element, and the third element are established in dependence upon an odd multiple of a quarter wavelength of the first operating frequency of the first filar element.

19. The filar antenna element according to clause 17, wherein either: the first element is disposed between the second element and the third element; or: the first element is disposed to one side of both the second element and the third element.

20. The filar antenna element according to clause 1, further comprising another filar antenna element comprising: a fourth element having a first end electrically coupled to the ground plane and a second distal end; and a fifth element having a first end electrically coupled to the ground plane and a second distal end; wherein the second distal end of the fourth element is electrically connected to the second distal end of the fifth element; a third electrical length from the ground plane to the ground plane via the fourth element and the fifth element is established in dependence upon a multiple of a half wavelength of a second operating frequency of the second filar element; wherein a filar antenna element is radiatively coupled to the other filar antenna element.

21. The filar antenna element according to clause 20, wherein: an electrical length of each of the fourth element and the fifth element are established in dependence upon an odd multiple of a quarter wavelength of the second operating frequency of the second filar element.

22. A filar antenna element comprising:

a first antenna structure comprising:

a first element having a first end electrically coupled to a feed point for at least one of coupling electrical signals to the feed point or receiving electrical signals from the feed point and second distal end; a second element having a first end electrically coupled to the a ground plane disposed proximate to the feed point and a second distal end; and a third element having a first end electrically coupled to the ground plane and a second distal end; and

a second antenna structure comprising:

a fourth element having a first end electrically coupled to the ground plane and a second distal end; and a fifth element having a first end electrically coupled to the ground plane and a second distal end; wherein

the second distal end of the second element is electrically connected to the second distal end of the first element; the second distal end of the third element is electrically connected to the second distal end of the first element; the second distal end of the fourth element is electrically connected to the second distal end of the fifth element; a first electrical length from the feed point to the ground plane via the first element and the second element is established in dependence upon a multiple of a half wavelength of a first operating frequency of the first filar element; and

a second electrical length from the feed point to the ground plane via the first element and the second element is established in dependence upon the same multiple of a half wavelength of a first operating frequency as that of the first electrical length;

a third electrical length from the ground plane to the ground plane via the fourth element and the fifth element is established in dependence upon a multiple of a half wavelength of a second operating frequency of the second filar element; and

the first filar structure and second filar structure are radiatively coupled to each other.

23. The filar antenna element according to clause 22, wherein: an electrical length of each of the first element, the second element, and the third element are established in dependence upon an odd multiple of a quarter wavelength of the first operating frequency of the first filar element; and an electrical length of each of the fourth element and the fifth element are established in dependence upon an odd multiple of a quarter wavelength of the second operating frequency of the second filar element.

24. The filar antenna element according to clause 22, wherein either: the first element is disposed between the second element and the third element; or: the first element is disposed to one side of both the second element and the third element.

25. The filar antenna element according to clause 22, wherein: the first element is disposed to one side of both the second element and the third element; and the second filar structure is disposed with respect to the first filar structure such that the first element is furthest from the second filar structure.

26. The filar antenna element according to clause 22, wherein:

the filar antenna element is one of a plurality of $N$ filar antenna elements disposed in a predetermined configuration with respect to a circuit board; and
an electrical phase of the electrical signals coupled to or from the feed point of each filar antenna element of the plurality of $N$ filar antenna elements is offset by a phase angle of 360/N relative to each adjacent filar antenna element of the plurality of $N$ filar antenna elements.

27. An antenna element comprising:
a first section coupled at one end to one of a microwave feed point and ground having a first length, a first width at the end coupled to the one of the microwave feed point and ground, and a second width at a distal end to that coupled to the one of the microwave feed point and ground; and a second section coupled at one end to the distal end of the first section having a second length, a third width at the end coupled to the first section and a fourth width at a distal end to that coupled to the first section; wherein the height of the antenna element is reduced relative to a length of a filar antenna element operating at the same frequency as the antenna element.

28. The antenna according to clause 27, wherein: the second section tapers linearly from the second width to the third width; and the third width is larger than the second width.

29. The antenna according to clause 27, wherein: the second section tapers non-linearly from the second width to the third width; and the third width is larger than the second width.

30. The antenna according to clause 27, wherein: the first section has a first angle to a plane; and the second section has a second angle to the plane.

The foregoing disclosure of the exemplary embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

## Claims

1. A filar antenna comprising:

a ground plane;

a feed point proximate the ground plane;
a first filar element comprising:

a first element having a first end electrically coupled to the feed point and a second distal end;
a second element having a first end electrically coupled to the ground plane and a second distal end; and
a third element having a first end electrically coupled to the ground plane and a second distal end; and

a second filar element comprising:

a fourth element having a first end electrically coupled to the ground plane and a second distal end; and
a fifth element having a first end electrically coupled to the ground plane and a second distal end;
wherein

the second distal end of the second element is electrically connected to the second distal end of the first element;
the second distal end of the third element is electrically connected to the second distal end of the first element;
a first electrical length from the feed point to the ground plane via the first element and the second element is established in dependence upon a multiple of a half wavelength of a first operating frequency of the first filar element;
a second electrical length from the feed point to the ground plane via the first element and the second element is established in dependence upon the same multiple of a half wavelength of a first operating frequency as that of the first electrical length;
the second distal end of the fourth element is electrically connected to the second distal end of the fifth element;
a third electrical length from the ground plane to the ground plane via the fourth element and the fifth element is established in dependence upon a multiple of a half wavelength of a second operating frequency of the second filar element; wherein
the second filar element is radiatively coupled to the first filar element.

2. The filar antenna according to claim 1, wherein
an electrical length of each of the fourth element and the fifth element are established in dependence upon an odd multiple of a quarter wavelength of the second operating frequency of the second filar element.

3. The filar antenna according to claim 1, wherein

the first filar element and the second filar element are either attached to a carrier or supported by the carrier;
the carrier is shaped to a predetermined geometry;
the first element, the second element, and the third element are shaped appropriately such that each trace a helical path from its first end to its second distal end across the carrier;
the fourth element and the fifth element are shaped appropriately such that each trace a helical path from its first end to its second distal end across the carrier;
the first element and the second element are separated by a first spacing;
the first element and the third element are separated by a second spacing;
the fourth element and the fifth element are separated by a third spacing; and
the second filar element is disposed at a fourth spacing from the first filar element.

4. The filar antenna according to claim 1, further comprising:

a feeding network on a circuit board comprising the ground plane and a combining network with a plurality of feed points; and
a filar antenna with an equal plurality of filar nodes, wherein
said combining network comprised of circuit elements effective to constructively sum microwave electrical signals present at each of said feed points, each of said electrical signals having a predetermined relative phase relationship, each of said feed points connected to a corresponding one of said filar nodes;
said filar antenna comprising a plurality of the first filar elements arranged around and above the circuit board and a plurality of the second filar elements arranged around and above the circuit board.

5. The filar antenna according to claim 4, wherein

the plurality of first filar elements and the plurality of second filar elements are either attached to a carrier or supported by the carrier;

the carrier is shaped to a predetermined geometry;

the first element, the second element, and the third element are shaped appropriately such that each trace a helical path from its first end to its second distal end across the carrier;

the fourth element and the fifth element are shaped appropriately such that each trace a helical path from its first end to its second distal end across the carrier;

the first element and the second element are separated by a first spacing;

the first element and the third element are separated by a second spacing;

the fourth element and the fifth element are separated by a third spacing;

each second filar element of the plurality of second filar elements is disposed at a fourth spacing from a preceding first filar element of the plurality of first filar elements in the alternate arrangement; and

each second filar element of the plurality of second filar elements is disposed at a fifth spacing from a succeeding first filar element of the plurality of first filar elements in the alternate arrangement.

Figure 1A

EP 4 742 450 A2

Figure 2A

Figure 1B

Figure 2B

EP 4 742 450 A2

300A

300B

Figure 3

400A

400B

Figure 4

500A

500B

500C

D

L

V

+  V  −

I_T

I_T

−  V/2  +

V/2
+   −

I_{A/2}

I_{A/2}

+  V/2  −

V/2
+   −

+

=

Figure 5

600B

600A

Figure 6A

600C

Port
P=1
Z=25ohm

SUBCKT
ID=S1
NET="Antenna Mode"

SUBCKT
ID=S2
NET="Transmission Line Mode"

Figure 6B

EP 4 742 450 A2

1300

1310

Figure 13

1210B  1210C  1220B  1220C  1230B  1230C  1240B  1240C

1210A  1220A  1230A  1240A

Figure 7

# Characeristic Mode Equivalency

Figure 8

Legend:
- S(1,1) 810 Antenna Mode CP
- S(1,1) 820 TransmissionLine Mode CP
- S(1,1) 830 Decomposed and Recombined

Swp Max 2000MHz

Swp Min 1200MHz

820

830

810

EP 4 742 450 A2

**Characeristic Mode Equivalency**

Swp Max
2000MHz

S(1,1) 910
Folded Antenna WIPLD

S(1,1) 920
Decomposed and Recombined

920

910

Swp Min
1000MHz

Figure 9

$(1+\gamma)^2 : 1$

Figure 10

Figure 11

Figure 12

1200

1210B
1210A
1210C
1240C
1240A
1240B
1230C
1230A
1230B
1220B
1220C
1220A

1400

1410A 1410C

1410B

Figure 14

1500

1520A
1520B
1510A 1510B

Figure 15

1610A 1610B
1620A 1630A
1620B 1630B
1620C

Figure 16

1720C 1730A
1720B 1730B
1720A
1710A 1710B

Figure 17

Figure 18

1800

1840
1850(1)
1850(R)
1870
1860
1820(M)
1820(1)
1810
1830(1)
1830(N)

Figure 19

1900

1930
1940(1)
1940(M)
1960
1950
1910
1920(1)
1920(R)

Figure 20

2100A

2100B

2100C

2100D

Feed Point (FP)
2150A

Feed Point (FP)
2150B

Feed Point (FP)
2150C

Feed Point (FP)
2150D

0°    90°    180°    270°

Hybrid Coupler
2130

Hybrid Coupler
2140

2100

Balun
2120

O/P 2110    $f$

Figure 21

Figure 22

2220

2230

$L_{ANTENNA\_MAX}$

$H_{ANTENNA}$

2210

FP1 2240     FP2 2250

2320

2330

2310

EP 4 742 450 A2

Figure 24

Figure 25

Figure 26

Figure 27

2610

2610B

2610A

$H_{ANTENNA}$

2710

2710B

2710A

$H_{ANTENNA}$

Ground Plane or PCB
(Optional)

Figure 28

Figure 29

Figure 30

3110    3120    3130    3140    3150    3160    3170    3180

Figure 31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63370774